(19) Europäisches Patentamt
European Patent Office
Office européen des brevets

(11) **EP 3 196 769 A1**

(12) **EUROPEAN PATENT APPLICATION**
published in accordance with Art. 153(4) EPC


(43) Date of publication:
**26.07.2017 Bulletin 2017/30**

(21) Application number: **15835054.6**

(22) Date of filing: **24.07.2015**

(51) Int Cl.:
***G06F 13/36*** ***(2006.01)*** ***G06F 3/00*** ***(2006.01)***
***G06F 3/06*** ***(2006.01)*** ***G06F 3/08*** ***(2006.01)***
***G06F 13/38*** ***(2006.01)***

(86) International application number:
**PCT/JP2015/071078**

(87) International publication number:
**WO 2016/031456 (03.03.2016 Gazette 2016/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **28.08.2014 JP 2014173560**



(71) Applicant: **Sony Corporation**
**Tokyo 108-0075 (JP)**

(72) Inventors:
- **HAYASHI, Takamichi**
  **Tokyo 108-0075 (JP)**
- **KUNO, Hiroshi**
  **Tokyo 108-0075 (JP)**
- **MIYASHITA, Makoto**
  **Tokyo 108-0075 (JP)**
- **EBIHARA, Munetake**
  **Tokyo 108-0075 (JP)**

(74) Representative: **Witte, Weller & Partner**
**Patentanwälte mbB**
**Postfach 10 54 62**
**70047 Stuttgart (DE)**


(54) **READER/WRITER DEVICE, INFORMATION PROCESSING DEVICE, DATA TRANSFER CONTROL METHOD, AND PROGRAM**


(57) A configuration in which both record/reproduction data and a security command can be transferred between a host and a recording device connected to the host is implemented. A USB reader/writer includes a USB-A connector and a USB-micro B connector, and when a power supply host is connected to the USB-micro B connector, and a recording medium is mounted into the USB-A connector side, the reader/writer control unit transfers record/reproduction data of the recording medium through a mass storage class supporting data transfer unit, and transfers a security command applied to an authentication process or the like through a non-mass storage class supporting data transfer unit. The host equipped with the USB reader/writer performs data transfer of different categories using two paths, that is, a record/reproduction data path and a security command path.


*FIG. 12*

(EXEMPLARY DATA TRANSFER CONFIGURATION A)
RECORD/ REPRODUCTION DATA PATH
SECURITY COMMAND PATH
(A) APPLICATION (APP)
REPRODUCING APPLICATION
REPRODUCING APPLICATION LIBRARY
RECORD/REPRODUCTION DATA FILE READ/WRITE (File Read/Write) PATH
SECURITY COMMAND PATH
(B) FIRMWARE (FW)
FILE SYSTEM (File System)
USB HOST API (USB HOST API)
MASS STORAGE CLASS (Mass Storage Class)
USB HOST DRIVER (USB Host Driver)
(C) DEVICE (Device)
MSC SUPPORTING DATA TRANSFER UNIT
NON-MSC SUPPORTING DATA TRANSFER UNIT
USB READER/WRITER (USB RW)
350
351
411
412
300
311
312
313
314
100
110
120
200

## Description

### TECHNICAL FIELD

The present disclosure relates to a reader/writer device, an information processing device, and a data transfer control method, and a program. In further detail, the present disclosure relates to a reader/writer device, an information processing device, and a data transfer control method, and a program, which are applied to a data recording/reproducing process using a reader/writer including a connection unit such as a USB connector and a card slot in which a recording medium is mountable.

### BACKGROUND ART

In recent years, semiconductor type memory devices (recording media) such as SD cards are often used as large-capacity memory devices.
Such memory devices are often used in, for example, PCs, smart phones, tablet terminals, and the like.
Further, as a reader/writer having a data access function to a memory card, for example, there is a reader/writer device including a card slot in which a memory card is mountable and a USB connector (terminal).
Specifically, it is a reader/writer (a USB reader/writer) which is equipped with a USB-A connector and a USB-micro B connector and in which a card slot is set to the USB-A connector side.
When a micro SD card is mounted on the USB-A connector side of the reader/writer, and the USB-micro B connector is inserted into, for example, a USB-micro B port of a smart phone, the smart phone can perform access to (reading/writing of data from/to) the micro SD card.
However, for example, among information processing devices such as smart phones, there is an information processing device that automatically recognizes a device mounted into a device mounting portion such as a USB port and restricts data input/output via the port according to a recognition result.
Specifically, in some types of information processing devices such as smart phones in which Android (registered trademark) is installed as an operation system (OS), when a device having a USB port is recognized to be a memory device, a setting is performed such that only transfer of record/reproduction data to the memory device is permitted, and transfer of non-record/reproduction data, for example, transfer of an authentication command is not permitted.
When transfer data is restricted as described above, there are cases in which it is unable to read data stored in a device (for example, a micro SD card).
In other words, there are cases in which data stored in a micro SD card is content with a use restriction in which content is permitted to be read only when an authentication is successfully performed between an information processing device such as a smart phone serving as a content reproducing device and the micro SD card serving as a memory device.
Further, as a related art disclosing a configuration in which reading and reproduction of content from a recording medium are permitted only when an authentication is successfully performed, for example, there is Patent Document 1 (Japanese Patent Application Laid-Open No. 2014-085985).
As described above, in the information processing device such as the smart phone in which Android (registered trademark) is installed, when the USB reader/writer into which the recording medium is mounted is inserted into the USB port, transfer data via the port is restricted, and thus it is unable to transfer a command such as an authentication command. As a result, there is a problem in that it is unable to perform an authentication process and read or reproduce content.

### CITATION LIST

### PATENT DOCUMENT

Patent Document 1: Japanese Patent Application Laid-Open No. 2014-085985

### SUMMARY OF THE INVENTION

### PROBLEMS TO BE SOLVED BY THE INVENTION

The present disclosure was made in light of the foregoing, and it is an object of the present disclosure to provide a reader/writer device, an information processing device, and a data transfer control method, and a program, which are capable of performing input and output of other commands such as an authentication process command in addition to input and output of record/reproduction data on a recording medium in a setting in which a reader/writer device having a recording medium mounted therein is connected to an information processing device such as a smart phone.

SOLUTIONS TO PROBLEMS

A first aspect of the present disclosure lies in a USB reader/writer device, including:

a recording medium mounting unit into which a recording medium is mountable;
a USB connector; and
a control unit that performs a data transfer process between the recording mediummounted into the recording medium mounting unit and a host connected to the USB connector,
wherein the control unit performs
transfer control of record/reproduction data for the recording medium using a mass storage class (MSC) supporting data transfer unit, and
transfer control of a security command for the recording medium using a non-mass storage class supporting data transfer unit.

Further, a second aspect of the present disclosure lies in an information processing device, including:

a communication unit that is connected with a device into which a recording medium is mounted; and
a data processing unit that executes a reproducing application that receives record data of the recording medium through the communication unit and reproduces the record data,
wherein the data processing unit performs a data transfer process using the following two paths:

(a) a record/reproduction data path in which record data of the recording medium is input; and
(b) a security command path in which a security command or security data other than the record data of the recording medium is transferred.

Further, a third aspect of the present disclosure lies in a data transfer control method performed in a reader/writer device, the reader/writer device including a recording medium mounting unit into which a recording medium is mountable, a USB connector, and a control unit that performs a data transfer process between the recordingmediummounted into the recording medium mounting unit and a host connected to the USB connector, the data transfer control method including:

performing, by the control unit,
transfer control of record/reproduction data for the recording medium using a mass storage class (MSC) supporting data transfer unit, and
transfer control of a security command for the recording medium using a non-mass storage class supporting data transfer unit.

Further, a fourth aspect of the present disclosure lies in a data transfer control method performed in an information processing device, the information processing device including a communication unit that is connected with a device into which a recording medium is mounted and a data processing unit that executes a reproducing application that receives record data of the recording medium through the communication unit and reproduces the record data, the data transfer control method including:

performing, by the data processing unit, a data transfer process using the following two paths:

(a) a record/reproduction data path in which record data of the recording medium is input; and
(b) a security command path in which a security command or security data other than the record data of the recording medium is transferred.

Further, a fifth aspect of the present disclosure lies in a program causing a reader/writer device to perform a data transfer control process, the reader/writer device including a recording medium mounting unit into which a recording medium is mountable, a USB connector, and a control unit that performs a data transfer process between the recording medium mounted into the recording medium mounting unit and a host connected to the USB connector, the program causing the control unit to execute:

transfer control of record/reproduction data for the recording medium using a mass storage class (MSC) supporting data transfer unit, and
transfer control of a security command for the recording medium using a non-mass storage class supporting data transfer unit.

Further, a sixth aspect of the present disclosure lies in a program causing an information processing device to execute a data transfer control process, the information processing device including a communication unit that is connected with a device into which a recording medium is mounted and a data processing unit that executes a reproducing application that receives record data of the recording medium through the communication unit and reproduces the record data, the program causing the data processing unit to execute a data transfer process using the following two paths:

(a) a record/reproduction data path in which record data of the recording medium is input; and
(b) a security command path in which a security command or security data other than the record data of the recording medium is transferred.

Further, a program according to the present disclosure is, for example, a program which can be provided to an information processing device or a computer system capable of executing various program codes in a computer readable form through a storage medium or a communication medium. As the program is provided as a computer readable form, a process according to the program is implemented on the information processing device or the computer system.

Other objects, features, and advantages of the present disclosure will become clear by an embodiment of the present disclosure which will be described later or detailed description based on the appended drawings. Further, a system in this specification is a logical set configuration of a plurality of devices and not limited to a configuration in which all the devices are arranged in the same housing.

EFFECTS OF THE INVENTION

According to a configuration of an embodiment of the present disclosure, a configuration in which both record/reproduction data and a security command can be transferred between a host and a recording device connected to the host is implemented.

Specifically, a USB reader/writer includes a USB-A connector and a USB-micro B connector, and when a power supply host is connected to the USB-micro B connector, and a recording medium is mounted into the USB-A connector side, the reader/writer control unit transfers record/reproduction data of the recording medium through a mass storage class supporting data transfer unit, and transfers a security command applied to an authentication process or the like through a non-mass storage class supporting data transfer unit. The host equipped with the USB reader/writer performs data transfer of different categories using two paths, that is, a record/reproduction data path and a security command path.

Through the present configuration, a configuration in which both record/reproduction data and a security command can be transferred between a host and a recording device connected to the host is implemented.

Further, effects described in this specification are merely examples and not limited, and an additional effect may be obtained.

BRIEF DESCRIPTION OF DRAWINGS

Fig. 1 is a diagram for describing an exemplary configuration of a USB reader/writer.
Fig. 2 is a diagram for describing an exemplary use of a USB reader/writer.
Fig. 3 is a diagram for describing an exemplary use of a USB reader/writer.
Fig. 4 is a diagram for describing a data transfer process between a recording medium mounted into a USB reader/writer and an information processing device.
Fig. 5 is a diagram for describing a data transfer process between a recording medium mounted into a USB reader/writer and an information processing device.
Fig. 6 is a diagram for describing an exemplary configuration of a USB reader/writer according to the present disclosure.
Fig. 7 is a diagram for describing an exemplary configuration of a USB reader/writer according to the present disclosure.
Fig. 8 is a diagram for describing an exemplary configuration of a common USB reader/writer.
Fig. 9 is a diagram for describing an exemplary configuration of a USB reader/writer according to the present disclosure.
Fig. 10 is a diagram for describing temporal transition of an input signal to a reader/writer control unit of a USB reader/writer according to the present disclosure.

Fig. 11 is a diagram for describing temporal transition of an input signal to a reader/writer control unit of a USB reader/writer according to the present disclosure.

Fig. 12 is a diagram for describing a data transfer process configuration between an information processing device and a recording medium through a USB reader/writer.

Fig. 13 is a sequence diagram for describing a sequence of a data transfer process between an information processing device and a recording medium through a USB reader/writer.

Fig. 14 is a diagram for describing a data transfer process configuration between an information processing device and a recording medium through a USB reader/writer.

Fig. 15 is a sequence diagram for describing a sequence of a data transfer process between an information processing device and a recording medium through a USB reader/writer.

Fig. 16 is a diagram for describing a data transfer process configuration between an information processing device and a recording medium through a USB reader/writer.

Fig. 17 is a sequence diagram for describing a sequence of a data transfer process between an information processing device and a recording medium through a USB reader/writer.

Fig. 18 is a diagram illustrating a flowchart for describing a sequence before an authentication process between an information processing device and a recording medium through a USB reader/writer starts.

Fig. 19 is a diagram for describing an exemplary use of a USB reader/writer.

Fig. 20 is a diagram for describing a data transfer process configuration between an information processing device and a recording medium through a USB reader/writer.

Fig. 21 is a diagram for describing an exemplary connected device identification process corresponding to a data transfer path between an information processing device and a recording medium through a USB reader/writer.

Fig. 22 is a diagram for describing a correspondence of a data transfer path between an information processing device and a recording medium through a USB reader/writer.

Fig. 23 is a diagram illustrating a flowchart for describing a correspondence determination process sequence of a record/reproduction data path and a security command path between an information processing device and a recording medium through a USB reader/writer.

Fig. 24 is a diagram illustrating an example of description data of device mount information included in a Linux (registered trademark) system file which can be acquired through a mass storage class (MSC).

Fig. 25 is a diagram for describing an acquisition process of connected deviceinformation usinglinkinformation (symbolic link) acquired from description data of device mount information.

Fig. 26 is a diagram for describing connected device information obtained using link information (symbolic link) acquired from description data of device mount information.

Fig. 27 is a sequence diagram for describing a sequence of a data transfer process between an information processing device and a recording medium through a USB reader/writer.

Fig. 28 is a diagram for describing an exemplary configuration of an information processing device.

MODE FOR CARRYING OUT THE INVENTION

Hereinafter, a reader/writer device, an information processing device, and a data transfer control method, and a program according to the present disclosure will be described in detail with reference to the appended drawings. Further, the description will proceed according to the following sections.

1. Configuration of reader/writer device
2. Problem in which transmission and reception of secure command are restricted
3. Configuration that enables record/reproduction data and secure command to be transferred to medium
4. Exemplary circuit configuration of USB reader/writer
5. Exemplary configuration and exemplary process of host connected with USB reader/writer

5-1. Exemplary configuration A

5-2. Exemplary configuration B

5-3. Exemplary configuration C

6. Sequence of process of executing reproducing application in information processing device
7. Process when plurality of USB reader/writers are mounted into information processing device (host)
8. Exemplary configuration of information processing device
9. Other embodiments
10. Conclusion of configuration of present disclosure

[1. Configuration of reader/writer device]

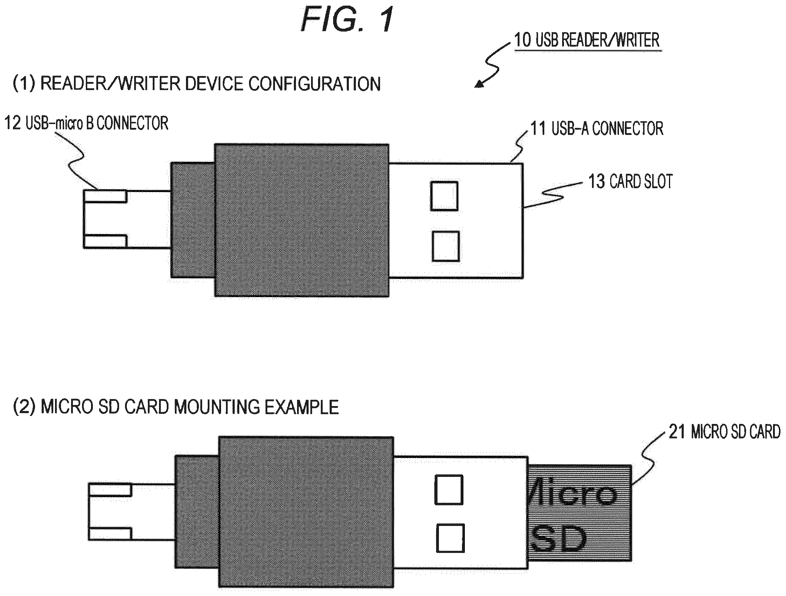

First, a configuration of a reader/writer device will be described with reference to Fig. 1 and drawings subsequent thereto.

Fig. 1 is a diagram for describing a configuration of a USB reader/writer 10.

The USB reader/writer 10 includes a USB-A connector 11 at one end and a USB-micro B connector 12 at the other end as illustrated in Fig. 1(A).

Further, the USB-A connector 11 includes a component in which a micro SD card is mountable, that is, a card slot 13.

Fig. 1(B) illustrates an example in which a micro SD card 21 is mounted into the card slot 13.

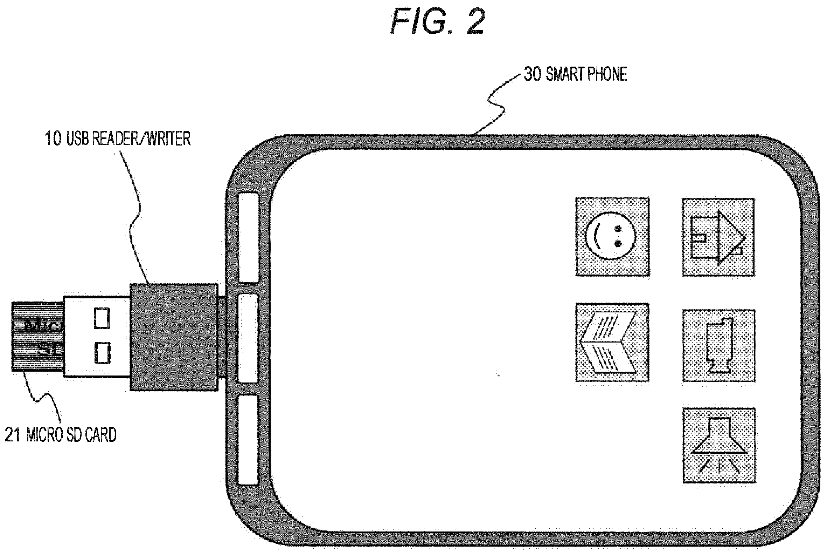

Fig. 2 illustrates an example in which the USB reader/writer 10 with the micro SD card 21 mounted into the card slot 13 is mounted into a smart phone 30.

In Fig. 2, a USB-micro B connector 13 of the USB reader/writer 10 is inserted into a USB-micro B port of the smart phone 30.

In this setting, the smart phone 30 can access a micro SD card 21 through the USB reader/writer 10, perform a data recording process of recording data in the micro SD card 21, and read data from the micro SD card 21.

The USB reader/writer 10 has the following components as described above with reference to Figs. 1 and 2:

(a) USB-A connector;
(b) USB-micro B connector; and
(c) micro SD card slot.

Further, as described above with reference to Fig. 2, when the micro SD card 21 is mounted on the USB-A connector 11 side of the USB reader/writer 10, and the USB-micro B connector 12 is inserted into the USB-micro B port of the smart phone, the smart phone can perform access to (reading/writing of data from/to) the micro SD card.

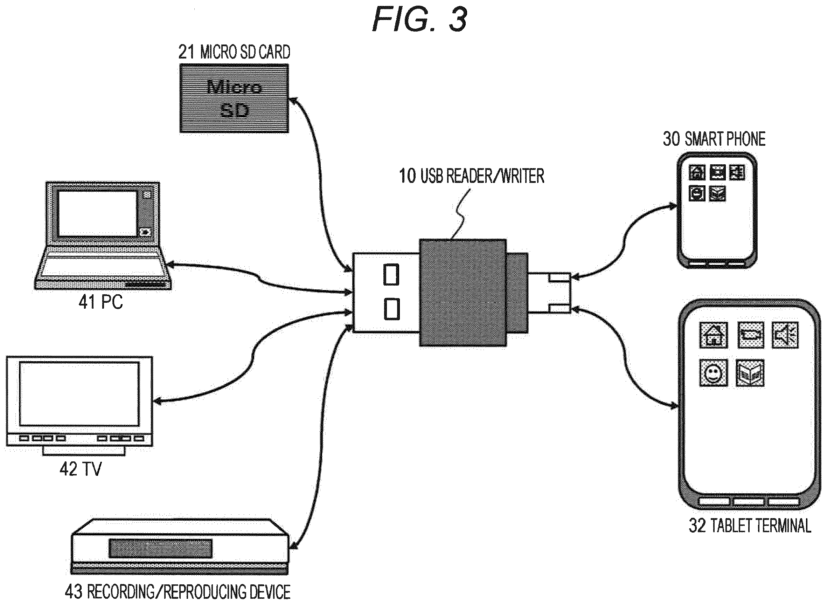

Fig. 3 is a diagram for describing an exemplary use of the USB reader/writer 10.

As described above, the USB reader/writer 10 includes the USB-A connector, the USB-micro B connector, and the micro SD card slot.

For example, the USB-A connector is inserted into a PC 41, a TV 42, a recording/reproducing device 43, and the like, and the USB-micro B connector is connected to the smart phone 30 or a tablet terminal 32, so that data exchange canbe performed between connected devices.

Further, the micro SD card 21 is inserted into the card slot of the USB-A connector, and the USB-micro B connector is connected to the smart phone 30 or the tablet terminal 32, so that the micro SD card 21 can be used as a removable medium similar to a USB memory.

[2. Problem in which transmission and reception of secure command are restricted]

Next, a problem when the micro SD card 21 is mounted on the USB-A connector 11 side of the USB reader/writer 10, the USB-micro B connector 12 is inserted into the USB-micro B port of the smart phone, and then access to the micro SD card 21 is performed, for example, as illustrated in Fig. 2 will be described.

As described above, among information processing devices such as smart phones, there is an information processing device that automatically recognizes a connected device when the device is mounted into a device mounting portion such as a USB port and restricts data input/output via the port according to a recognition result.

Specifically, in some types of information processing devices such as smart phones in which Android (registered trademark) is installed as an OS, when a device having a USB port is determined to be a memory device, only a process of recording data in a memory device or reading data from a memory device is permitted, and input and output of data such as an authentication command other than data to be read or written is prohibited.

For example, when such a restriction is applied, it is unable to reproduce data stored in the micro SD card 21 since it is copyright management content with a use restriction. In other words, it is unable to perform reproduction of content using authentication success between the content reproducing device (the smart phone 30) and the content storage medium (the micro SD card 21) as a content reproduction permit condition.

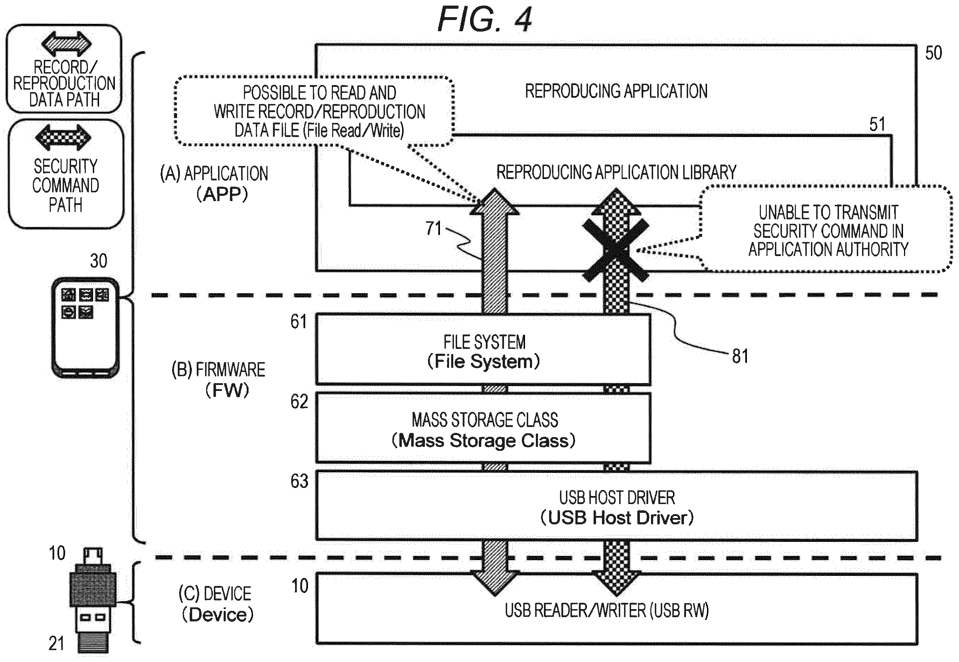

A data transfer process and a restricted data transfer process which are performed between the smart phone 30 serving as an information processing device in which Android (registered trademark) is installed as an OS and the USB reader/writer 10 described above with reference to Figs. 1 and 2 will be described with reference to Fig. 4.

Fig. 4 illustrates a process layer of the smart phone 30 equipped with the USB reader/writer 10.

The process layer of the smart phone 30 is greatly divided into the following two layers:

(A) an application (APP) layer; and

(B) a firmware (FW) layer.

(A) The application (APP) layer is a layer of a program (software) which can be downloaded from various application provision sites and easily added, for example additionally recorded, changed, or deleted through an information processing device, here, the smart phone 30.
On the other hand, (B) the firmware (FW) layer is a software layer which is recorded in the information processing device, here, the smart phone 30 basically as a fixed program.
Further, although not illustrated, an OS layer including an Android (registered trademark) OS serving as an OS is positioned between (A) the application layer and (B) the firmware layer of Fig. 4.
Here, some components of (B) the firmware layer, for example, a file system 61 and a mass storage class (MSC) 62 may be interpreted as a part of the OS layer.
Further, components such as a program in the layers illustrated in Fig. 4 are only some components used in a process according to the present disclosure.
For example, various applications can be installed in the smart phone 30, but only one application which is directly associated with a process of the present disclosure is shown in (A) the application (APP) layer of Fig. 4.
An application shown in (A) the application (APP) layer of Fig. 4 is a reproducing application 50 that reads content stored in a medium and performs a reproduction process.
The reproducing application 50 performs an authentication process with a medium having content stored therein according to a predetermined algorithm which is specified in advance, and reads content from the medium and performs a reproduction process only when the authentication is successfully performed.
Specifically, the reproducing application 50 may be configured with a SeeQVault (SQV) player or the like serving as an application that performs content reproduction, for example, according to a SQV which is a standard of a next generation copyright protection technique.
Further, the SQV is a standard that excludes illegal content use and implements right content use management by performing a process according to a predetermined algorithm when use-restricted content, for example, copyright management target content is recorded in a flash memory such as a SD card and reproduced.
Specifically, for example, the reproducing application 50 is unable to reproduce content from a medium when the authentication process with the medium having content stored therein is not successfully performed.
When the authentication process is successfully performed, and validity of the medium is confirmed, it is possible to read content from the medium and reproduce the content.
The reproducing application 50 includes a reproducing application library (for example, an SQV library) 51.
The reproducing application library 51 is a component of the reproducing application 50, that is, a logic installation unit in which various processing logics of executing the reproducing application 50 are installed.
Further, the reproducing application 50 is an application that operates on Android (registered trademark) serving as an OS.
(B) The firmware (FW) layer is a software layer which is recorded in the information processing device, here, the smart phone 30 basically as a fixed program as described above.
Further, Fig. 4 illustrates only some firmware used in a process of the present disclosure.
Fig. 4 illustrates the file system 61, the mass storage class 62, and a USB host driver 63.
The file system 61 is a component that constitutes the firmware (FW) layer of the smart phone 30 which is an Android (registered trademark) terminal and serves a program that implements a data read/write function on a medium, for example, the micro SD card 21 according to a predetermined file system regulation. For example, the file system 61 performs reading and writing of data according to a file system regulation such as FAT32 or exFAT.
The mass storage class (MSC) 62 is a component that constitutes the firmware (FW) layer of the smart phone 30 which is an Android (registered trademark) terminal and serves as a program that performs a mass storage class host function.
The mass storage class (MSC) is a specification for a connection with a secondary storage device such as a USB memory which is defined in a USB standard. The mass storage class (MSC) is a driver program that recognizes a USB device connected to an information processing device as a storage device and performs storage device control.
A device having the mass storage class (MSC) installed therein can recognize a connected USB device as a removable medium and record or read data without installation of a dedicated driver corresponding to a medium which is externally connected.
The USB host driver 63 is a component that constitutes the firmware (FW) layer of the smart phone 30 which is anAndroid (registered trademark) terminal and serves as a component with a general-purpose function common to USB devices such as insertion/extraction detection of a USB device.
(C) A device illustrated on the bottom layer of Fig. 4 is here the USB reader/writer (USB R/W) 10 described above with reference to Fig. 1 and the like.

Further, the USB reader/writer (USB R/W) 10 includes the following two connectors:

(a) the USB-A connector; and
(b) the USB-micro B connector,

as described above with reference to Fig. 1 and the like.

Thus, two connection states can be set in the smart phone 30 serving as the information processing device:

(a) a state in which the USB-A connector is connected; and
(b) a state in which the USB-micro B connector is connected.

Further,

(b) in the state in which the USB-micro B connector is connected,
the following two states can be set on the USB-A connector side:

(b1) a state in which the micro SD card 21 is inserted; and
(b2) a state in which any other device is connected.

Here, a process when the setting of the USB reader/writer (USB R/W) 10 is the state (b1), that is, the connection state in which the USB-micro B connector is connected to the smart phone 30 serving as the information processing device, and the micro SD card 21 is inserted into one side of the USB-A connector will be described.

As described above, the reproducing application 50 performs the authentication process with the medium having content stored therein, that is, the recording medium (the micro SD card 21) equipped with the USB reader/writer 10 according to a predetermined algorithm which is specified in advance, and reads content from the recording medium (the micro SD card 21) and performs the reproduction process only when the authentication is successfully performed.

However, the smart phone 30 serving as the information processing device illustrated in Fig. 4 is the smart phone 30 in which Android (registered trademark) is installed as an OS.

In the Android (registered trademark) terminal, when a device having a USB port is recognized to be a memory device, only a process of recording data in the memory device or reading data from the memory device is permitted, and for example, input and output of a command other than read/write data is prohibited.

Specifically, when the mass storage class (MSC) 62 of the firmware layer determines that a connected USB device is a storage device, none of applications in the application layer are able to perform, for example, input and output of a command other than read/write data according to OS-based control.

Thus, although the reproducing application 50 makes an attempt to perform the authentication process with the recording medium (the micro SD card 21) mounted into the reader/writer 10, the reproducing application 50 is unable to perform transmission and reception of an authentication command. As a result, it is difficult to perform the authentication process, and it is difficult to perform content reading from the medium (the micro SD card 21) and the reproduction process which are performed only when the authentication is successfully performed.

Fig. 4 illustrates a record/reproduction data path 71 and a security command path 81.

The record/reproduction data path 71 is a transmission/reception path of a record/reproduction data file between the reproducing application 50 of the host (the smart phone 30) and the recording medium (the micro SD card 21) mounted into the device (the USB reader/writer 10).

For example, the security command path 81 is a path of a command that is transmitted and received in the authentication process between the reproducing application 50 and the micro SD card 21.

All paths between the micro SD card 21 and the reproducing application 50 involve the following path:

the micro SD card 21 - the USB reader/writer 10 - the mass storage class (MSC) 62 - the file system 61 - the reproducing application 50.

The record/reproduction data is transferred between the micro SD card 21 and the reproducing application 50 via the record/reproduction data path 71.

However, for example, for the authentication command and the authentication data which are transmitted and received in the authentication process between the reproducing application 50 and the micro SD card 21, command transfer via the security command path 81 illustrated in Fig. 4 is not permitted.

It is because when a device connected to the USB port is determined to be a storage device, an application prohibits command transfer according to OS control.

As described above, in some type of Android (registered trademark) terminals in which Android (registered trademark) is installed as an OS, when a device having a USB port is recognized to be a memory device, only a process of recording data in the memory device or reading data from the memory device is permitted, and for example, input and output of a command other than read/write data is prohibited.

In other words, when the mass storage class (MSC) 62 of the firmware layer determines that a USB device connected to a host such as a smart phone is a storage device, none of applications in the application layer are able to perform, for example, transfer of a command other than read/write data according to OS-based control.

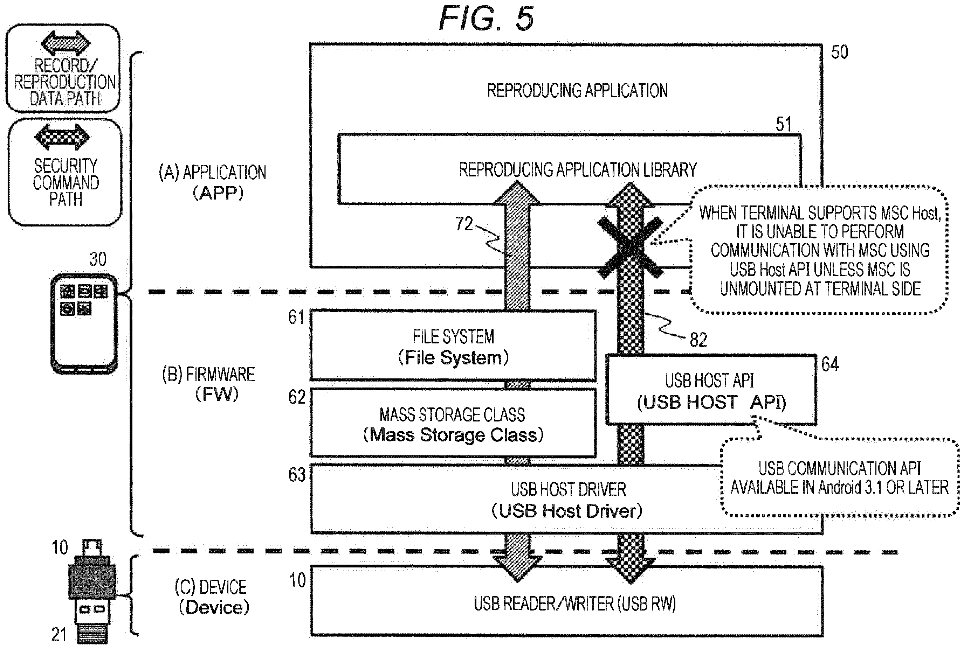

Fig. 5 illustrates a setting example of a security command path 82 in an exemplary configuration in which a USB host API 64 that can be used in Android (registered trademark) 3.1 or later is set in the firmware (FW) layer.

The USB host API 64 is an API that has a USB host function, that is, a control function on a USB device and provides a data transfer control function between the USB device and the application.

In this case, the USB device is the USB reader/writer 10 equipped with the medium (the micro SD card 21), and the USB host API 64 can control the USB reader/writer 10 equipped with the medium (the micro SD card 21).

Fig. 5 illustrates a record/reproduction data path 72 and the security command path 82 which are assumed in a setting including the USB host API 64.

When data transfer can be performed using the two paths individually, transmission and reception of the authentication command and transmission and reception of the record/reproduction data can be performed between the USB reader/writer 10 equipped with the medium (the micro SD card 21) and the application 50.

However, the USB host API 64 is merely one component of the firmware (FW) layer and is not a component having superiority over, for example, a control authority by the mass storage class 62 as illustrated in Fig. 5.

Thus, after a device connected to a USB port of the smart phone 30 serving as the information processing device is recognized to be a storage device, and control by the mass storage class 62 starts under control of an OS, that is, after a mass storage class (MSC) mount state is set, only transfer of the record/reproduction data via the mass storage class 62 is permitted.

As a result, transfer of the security command via the USB host API 64 is prohibited. In other words, it is unable to transfer the authentication command or the like using the security command path 82 illustrated in Fig. 5.

Thus, in the configuration including the USB host API 64 illustrated in Fig. 5, similarly to the configuration of Fig. 4, after data transfer control by the mass storage class (MSC) 62 starts, it is difficult to perform transfer of the security command between the reproducing application 50 and the micro SD card 21 mounted into the USB reader/writer 10, and it is difficult to perform reading and reproduction of content which are performed only when the authentication is successfully performed.

[3. Configuration that enables the record/reproduction data and secure command to be transferred to medium]

Next, an exemplary configuration that solves the above problems and enables both the record/reproduction data and the secure command data to be transferred to the medium will be described.

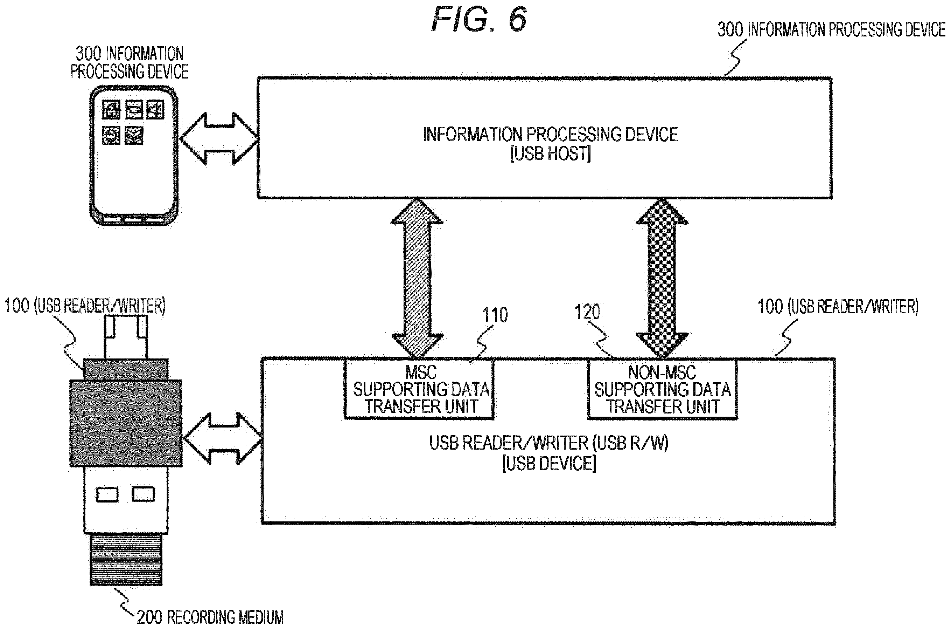

Fig. 6 is a diagram for describing an exemplary configuration of a USB reader/writer 100 according to an embodiment of the present disclosure.

The USB reader/writer 100 illustrated in Fig. 6 includes the following components, similarly to the USB reader/writer 10 described above with reference to Fig. 1 and the like:

(a) a USB-A connector;
(b) a USB-micro B connector; and
(c) a card slot into which a recording medium is mounted.

The USB reader/writer 100 of the present disclosure has a configuration in which a recording medium 200, for example, the micro SD card can be mounted into the card slot of the USB reader/writer 100 on the USB-A connector side. Further, when the USB-micro B connector is inserted into a USB-micro B port of an information processing device 300 such as a smart phone, the information processing device 300 canperformaccess to (reading/writing of data from/to) the recording medium 200.

The USB reader/writer 100 illustrated in Fig. 6 includes two data transfer units:

(1) a mass storage class (MSC) supporting data transfer unit 110; and
(2) a non-mass storage class (MSC) supporting data transfer unit 120,

as illustrated in Fig. 6.

Further, both of the two data transfer units perform data transfer with the information processing device 300 through the USB-micro B connector of the USB reader/writer 100.

In other words, the two data transfer units are configured physically as one data transfer unit but are two logical data transfer units which are capable of transferring data of logically different categories.

The recording medium 200 such as the micro SD card can be mounted into the card slot on the other USB-A connector side.

The two data transfer units of the USB reader/writer 100 illustrated in Fig. 6 are used in the following data transfer processes.

(1) The mass storage class (MSC) supporting data transfer unit 110 is used in the data transfer process of the record/reproduction data using the recording medium 200.
(2) The non-mass storage class (MSC) supporting data transfer unit 120 is a data transfer unit which is used for transfer of non-record/reproduction data using the recording medium 200, for example, transfer of authentication data of an authentication command tower applied to the authentication process.

Further, the non-mass storage class (MSC) supporting data transfer unit 120 is configured with, for example, a vendor unique class supporting data transfer unit, a human interface device (HID) class supporting data transfer unit, or the like.

The vendor unique class supporting data transfer unit or the HID class is a class which is defined in the USB standard as a component that can be set in, for example, the firmware (FW) layer on the information processing device 300 side. The vendor unique class supporting data transfer unit or the HID class is a component including a program of performing input/output control of data or a command when devices other than a storage device, for example, various input devices such as a keyboard and a mouse are connected.

As described above, the non-mass storage class (MSC) supporting data transfer unit 120 can be configured with the vendor unique class supporting data transfer unit or the HID class supporting data transfer unit. Further, the non-mass storage class (MSC) supporting data transfer unit 120 is not limited to the vendor unique class supporting data transfer unit or the HID class supporting data transfer unit and may have any other configuration. Preferably, the non-mass storage class (MSC) supporting data transfer unit 120 is configured with a data transfer unit which is capable of transferring data of a different category from transfer data controlled by the mass storage class (MSC), specifically, the authentication command or the like.

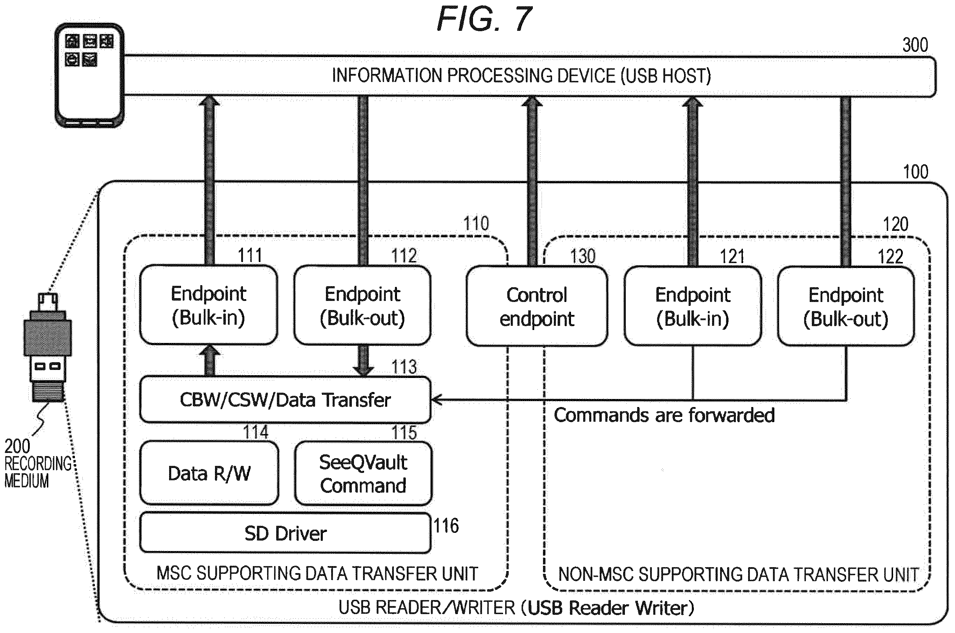

Fig. 7 is a diagram for describing a detailed configuration of the data transfer unit of the USB reader/writer 100 of the present disclosure.

The USB reader/writer 100 includes the two data transfer units:

the mass storage class (MSC) supporting data transfer unit 110; and
the non-mass storage class (MSC) supporting data transfer unit 120,
as described above with reference to Fig. 6.

Both of the two data transfer units are physically one data transfer unit with going through the USB-micro B connector of the USB reader/writer 100 but are data transfer units which are logically divided into two to be differently used according to a type of transfer data.

The USB reader/writer 100 serving as the USB device performs data transmission and reception with the host (USB host) including the information processing device 300 such as the smart phone as illustrated in Fig. 7.

In the present embodiment, the data transfer is performed through the USB-micro B connector of the USB reader/writer 100.

The recording medium 200 is mounted into the card slot of the USB reader/writer 100 on the USB-A connector side.

The mass storage class (MSC) supporting data transfer unit 110 is used in a transfer process of record data for the recording medium 200 or reproduction data from the recording medium 200.

The non-mass storage class (MSC) supporting data transfer unit 120 is used in the data transfer of the non-record/reproduction data using the recording medium 200, for example, the data transfer of a command or the like applied to the authentication process.

A control endpoint 130 is a control information transfer buffer between the host (the information processing device 300) and the device (the USB reader/writer 100). For example, the control endpoint 130 stores setting information of a data transfer mode.

Further, for example, one of the mass storage class (MSC) supporting data transfer unit 110 and the non-mass storage class (MSC) supporting data transfer unit 120 is selectively used according to a mode setting.

The mass storage class (MSC) supporting data transfer unit 110 includes the following components:

an endpoint (Endpoint (Bulk-in)) 111;
an endpoint (Endpoint (Bulk-out)) 112;
A CBW/CSW/data transfer unit (CBW/CSW/Data Transfer) 113;
a data reader/writer unit (DataR/W) 114;
a command processing unit (SeeQVault Command) 115; and
a medium driver (SD Driver) 116.

The endpoint (Endpoint (Bulk-in)) 111 is an intermediate buffer used at the time of bulk transfer of data from the device (the USB reader/writer 100) to the host (the information processing device 300) side (a mode in which large-capacity data is transferred with high reliability) and stores data to be output to the host (the information processing device 300).

For example, the endpoint (Endpoint (Bulk-in)) 111 of the mass storage class (MSC) supporting data transfer unit 110 is used to store data read from the recording medium 200 mounted on the USB-A connector side of the device (the USB reader/writer 100) and output the data to the information processing device (host) 300.

The endpoint (Endpoint (Bulk-out)) 112 is an intermediate buffer used at the time of bulk transfer of data from the host (the information processing device 300) side to the device (the USB reader/writer 100) and stores input data from the host (the information processing device 300).

For example, the endpoint (Endpoint (Bulk-out)) 112 of the mass storage class (MSC) supporting data transfer unit 110 is used to receive data to be written in the recording medium 200 mounted on the USB-A connector side of the USB reader/writer 100 and store the data.

The data transfer using the endpoints is performed as the bulk transfer. In the bulk transfer process, in addition to a transfer data main body, a command or status information is transferred.

The CBW/CSW/data transfer unit (CBW/CSW/Data Transfer) 113 performs control of transfer information such as a command, a status, and data.

The CBW stands for a command block wrapper and is, for example, a wrapper used when the host transmits a SCSI command to the device.

The CSW stands for a command status wrapper and is a wrapper used when the device (the USB reader/writer 100) transfers a status to the host (the information processing device 300), that is, a transfer data format generating unit.

The CBW/CSW/data transfer unit (CBW/CSW/Data Transfer) 113 performs a process of extracting the SCSI command from the CBW input from the host (the information processing device 300), a process of setting a data format according to the CSW to the status output from the device (the USB reader/writer 100), and the like.

The data reader/writer unit (DataR/W) 114 reads/writes data from/to the recording medium 200 using a record/reproduction command (an SD command) in response to a record request or a reproduction request (Read/Write Request) for data input from the host (the information processing device 300) with respect to the recording medium 200.

The command processing unit (SeeQVault Command) 115 performs a process to which a command is applied using the security command (the SD command) for the recording medium 200, for example, data transfer control necessary for the authenticationprocess in response to various kinds of security command execution requests input from the host (the information processing device 300).

The command processing unit (SeeQVault Command) 115 performs a process related to the security command such as the authentication command necessary when content reproduction is performed according to the SQV which is a standard of a next generation copyright protection technology.

Further, the SQV is a standard for implementing content use management in which it is possible to perform a process under predetermined use management when use-restricted content, for example, copyright management target content is recorded in a flash memory such as an SD card and reproduced.

The medium driver (SD driver) 116 is a driver corresponding to the recording medium 200, for example, the micro SD cardmounted into the card slot of the USB reader/writer 100 on the USB-A connector side.

Data record for the recording medium 200, for example, the micro SD card is read, and a command transfer process is performed.

On the other hand, the non-mass storage class (MSC) supporting data transfer unit 120 includes the following components:

an endpoint (Endpoint (Bulk-in)) 121; and
an endpoint (Endpoint (Bulk-out)) 122.

The endpoint (Endpoint (Bulk-in)) 121 is an intermediate buffer used at the time of data bulk transfer from the device ((the USB reader/writer 100) side to the host (the information processing device 300), and stores data to be output to the host (the information processing device 300).

The endpoint (Endpoint (Bulk-in)) 121 of the non-mass storage class (MSC) supporting data transfer unit 120 is used, for example, when an authentication command, authentication data, or the like applied to the authentication process between the host (the information processing device 300) and the recording medium 200 mounted on the USB-A connector side of the device (the USB reader/writer 100) is output to the host (the information processing device 300).

The endpoint (Endpoint (Bulk-out)) 122 is an intermediate buffer used at the time of data bulk transfer from the host (the information processing device 300) side to the device (the USB reader/writer 100), and stores input data from the host (the information processing device 300).

The endpoint (Endpoint (Bulk-out)) 122 of the non-mass storage class (MSC) supporting data transfer unit 120 is used, for example, when an authentication command, authentication data, or the like applied to the authentication process between the host (the information processing device 300) and the recording medium 200 mounted on the USB-A connector side of the device (the USB reader/writer 100) is input from the host (the information processing device 300).

The command data such as the authentication command which is input and output through the non-mass storage class (MSC) supporting data transfer unit 120 is transmitted and received between the host (the information processing device 300) and the recording medium 200 mounted into the card slot of the USB reader/writer 100 on the USB-A connector side.

The data path becomes a path involving the following components. The authentication command or the like is transmitted and received between the host (the information processing device 300) and the recording medium 200 through the following components:

the two endpoints 121 and 122 of the non-MSC supporting data transfer unit 120;
the CBW/CSW/data transfer unit (CBW/CSW/Data Transfer) 113 of the MSC supporting data transfer unit 110;
the command processing unit (SeeQVault Command) 115 of the MSC supporting data transfer unit 110; and
the medium driver (SD driver) 116 of the MSC supporting data transfer unit 110,
and the authentication process is performed.

Further, it is a setting in which the host (the information processing device 300) is connected through the USB-micro B connector of the USB reader/writer 100, and the recording medium 200 is mounted into the card slot installed in the USB-A connector side of the USB reader/writer 100.

[4. Exemplary circuit configuration of USB reader/writer]

Next, an exemplary circuit configuration of the USB reader/writer 100 will be described.

The USB reader/writer 100 of the present disclosure includes the following two data transfer units as described above with reference to Figs. 6 and 7:

(1) themassstorageclass (MSC) supporting data transfer unit 110; and
(2) the non-mass storage class (MSC) supporting data transfer unit 120.

Further, the two data transfer units are two logical data transfer units that transfer data of different categories as described above.

Both of the two data transfer units perform the data transfer with the information processing device 300 through the USB-micro B connector of the USB reader/writer 100.

The recording medium 200 such as the micro SD card is mounted into the card slot on one USB-A connector side.

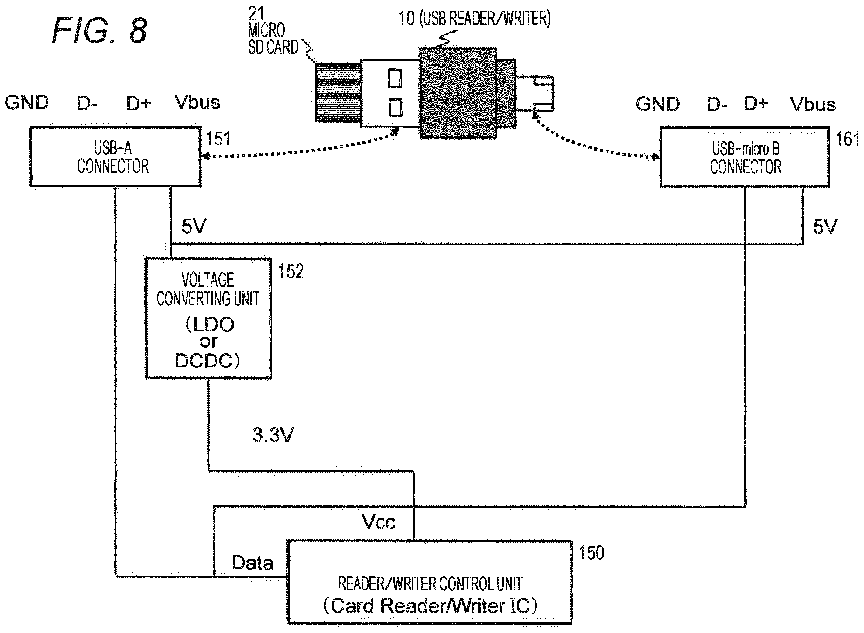

Before a description of a circuit configuration of the USB reader/writer 100 including the two data transfer units according to the present disclosure, an exemplary circuit configuration of a USB reader/writer of a related art, that is, a USB reader/writer of a related art that performs the data transfer using only a single data transfer unit rather than the two logical data transfer units will be described with reference to Fig. 8.

Fig. 8 illustrates an exemplary circuit configuration of a USB reader/writer 10 according to a related art.

The USB reader/writer 10 according to the related art includes
a reader/writer control unit 150,
a USB-A connector 151,
a voltage converting unit 152, and
a USB-micro B connector 161
as illustrated in Fig. 8.

The card slot of the micro SD card 21 is installed in the USB-A connector 151.

The USB-A connector 151 or the USB-micro B connector 161 is connected to the host such as the information processing device such as a PC or a smart phone.

In each connector unit, Vbus and GND are power connection units, and D- and D+ are signal connection units. Vbus corresponds to power of 5 V.

The USB reader/writer is supplied with power of 5 V from the host connected to the connectors and supplies 3.3 V (Vcc) transformed in the voltage converting unit 152 to the reader/writer control unit 150.

The voltage converting unit 152 is configured with, for example, a low drop out (LDO) or a DCDC converter.

The reader/writer control unit (Card Reader/Writer IC) 150 performs, for example, the data transfer control in the USB reader/writer 10 on the basis of supply power of 3.3 V (Vcc). For example, the data transfer control is performed according to a control program stored in a memory (not illustrated).

Here, a process when the micro SD card 21 is mounted into the card slot on the USB-A connector 151 side, and the information processing device such as the smart phone is connected to the USB-micro B connector 161 will be described.

The reader/writer control unit 150 receives power supplied from the host which is the information processing device such as the smart phone connected to the USB-micro B connector 161 and performs a host-initiated process.

As described above with reference to Figs. 4 and 5, when a device having a USB port is recognized to be a memory device, thehostservingastheAndroid (registeredtrademark) terminal in which Android (registered trademark) is installed as an OS may perform a setting such that a process of recording data in the memory device or a process of reading data from the memory device is permitted, but, for example, input and output of a command other than read/write data is not permitted. In other words, when themass storage class (MSC) 62 of the firmware layer illustrated in Figs. 4 and 5 recognizes that the USB device connected to the host such as the smart phone is a storage device, the application of the application layer is unable to perform, for example, input and output of a command other than read/write data according to the OS-based control.

The reader/writer control unit 150 performs transfer control of the record data to the micro SD card 21 mounted into the card slot on the USB-A connector 151 side and transfer control of the reproduction data from the micro SD card 21 according to the host-initiated control. In other words, the reader/writer control unit 150 performs transfer control of the record/reproduction data between the host connected to the USB-micro B connector 161 and the micro SD card 21 mounted into the card slot on the USB-A connector 151 side.

The transmission and reception of the authentication command between the host and the micro SD card 21 are not performed as described above with reference to Figs. 4 and 5.

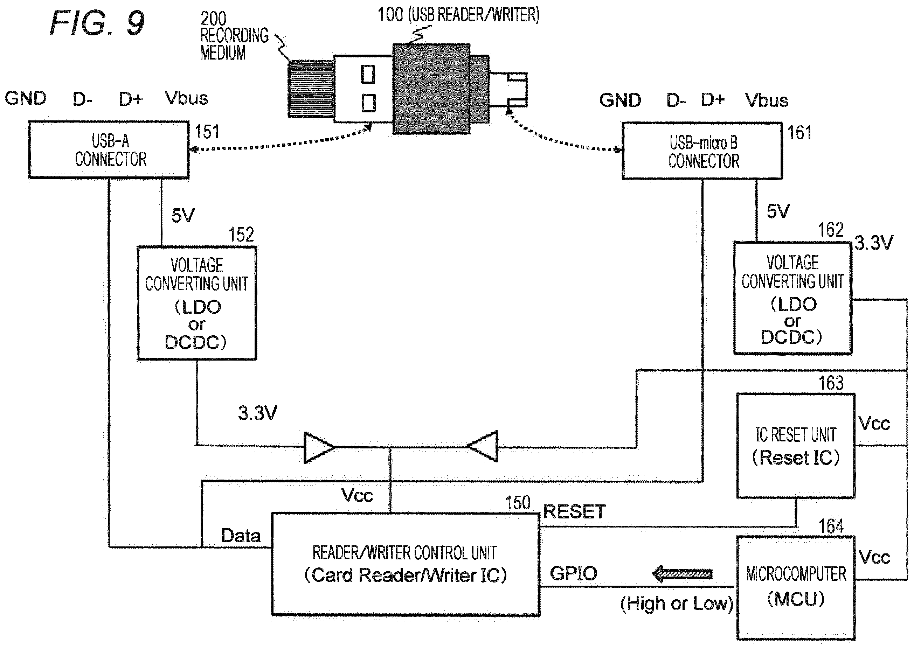

Next, an example of a circuit configuration of the USB reader/writer 100 including the two data transfer units according to the present disclosure will be described with reference to Fig. 9.

The USB reader/writer 100 including the two data transfer units according to the present disclosure includes
a reader/writer control unit 150,
a USB-A connector 151,
a voltage converting unit 152, and
a USB-micro B connector 161
as illustrated in Fig. 9. These components are substantially similar to those in the circuit of the USB reader/writer 10 according to the related art described above with reference to Fig. 8.

The USB reader/writer 100 including the two data transfer units according to the present disclosure further includes the following components:

a voltage converting unit 162,
an IC reset unit (Reset IC) 163, and
a microcomputer (micro computer unit (MCU)) 164
as illustrated in Fig. 9.

A card slot in which the recording medium 200 such as the micro SD card is installed is provided in the USB-A connector 151.

The USB-A connector 151 or the USB-micro B connector 161 is connected to the host such as the information processing device such as a PC or a smart phone.

In each connector unit, Vbus and GND are power connection units, and D- and D+ are signal connection units. Vbus corresponds to power of 5 V.

When the host such as a PC is connected to the USB-A connector 151, the USB reader/writer 100 receives power of 5 V supplied from the host connected to the USB-A connector 151 side, transforms 5 V into 3.3 V (Vcc) through the voltage converting unit 152, and supplies supply voltage of 3.3 V to the reader/writer control unit 150.

Further, when the host such as the smart phone is connected to the USB-micro B connector 161, the USB reader/writer 100 receives power of 5 V supplied from the host connected to the USB-micro B connector 161 side, transforms 5 V into 3.3 V (Vcc) through the voltage converting unit 162, and supplies supply voltage of 3.3 V to the reader/writer control unit 150, the IC reset unit 163, the microcomputer (MCU) 164.

Each of the voltage converting unit 152 and the voltage converting unit 162 is configured with, for example, a low drop out (LDO) or a DCDC converter.

The reader/writer control unit (Card Reader/Writer IC) 150 performs, for example, the data transfer control in the USB reader/writer 100 on the basis of supply power of 3.3 V (Vcc). For example, the data transfer control is performed according to a control program stored in a memory (not illustrated).

The IC reset unit 163 outputs a reset signal to a reset signal input unit of the reader/writer control unit (Card Reader/Writer IC) 150 at a predetermined timing on the basis of supply power of 3.3 V (Vcc).

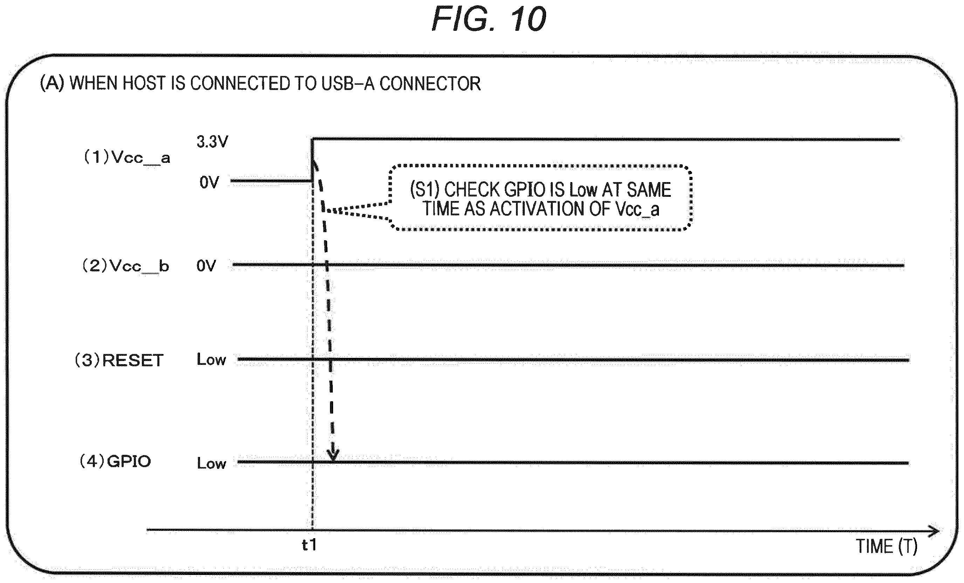

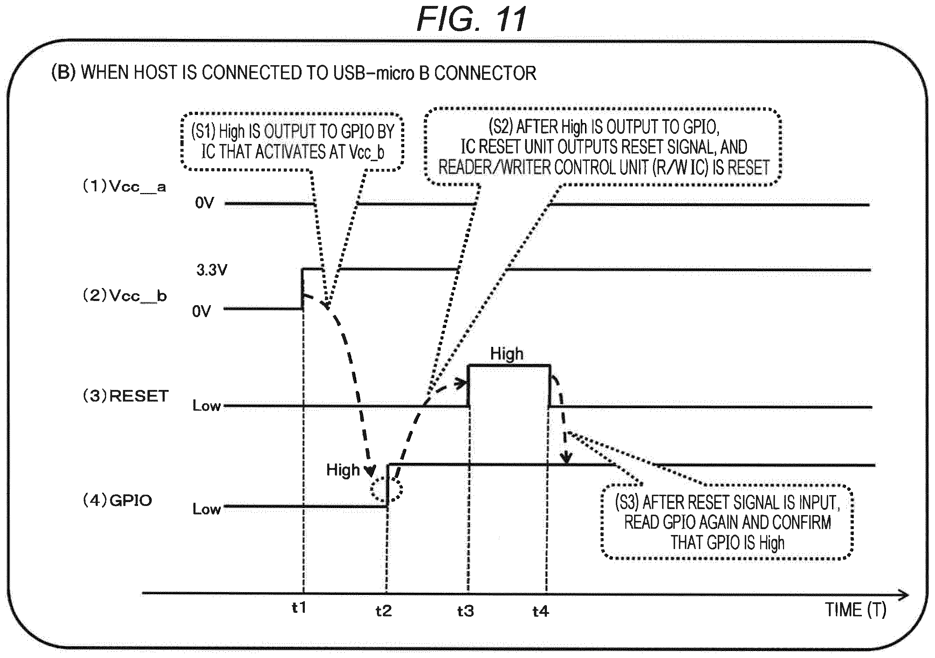

A reset signal output timing will be described later with reference to Figs. 10 and 11.

The microcomputer (MCU) 164 switches and outputs a high signal and a low signal to a general purpose input/output (GPIO) of the reader/writer control unit (Card Reader/Writer IC) 150 at a predetermined timing on the basis of supply power of 3.3 V (Vcc).

A switching timing of a GPIO input signal will be described later with reference to Figs. 10 and 11.

Next, transition of signals over time in the circuit of the USB reader/writer 100 including the two data transfer units according to the present disclosure described above with reference to Fig. 9 will be described with reference to Figs. 10 and 11.

Fig. 10 is a signal transition diagram when a power supply host for the USB reader/writer 100 is connected to the USB-A connector 151 of the USB reader/writer 100.

Fig. 11 is a signal transition diagram when the power supply host for the USB reader/writer 100 is connected to the USB-micro B connector 161 of the USB reader/writer 100.

Figs. 10 and 11 illustrate transitions of signals (1) to (4) in order from the upper side

(1) Vcc_a;
(2) Vcc_b;
(3) RESET; and
(4) GPIO.

A time elapses from the left to the right in a time axis (T) illustrated on the bottom, and transitions of signals over time are illustrated.

(1) Vcc_a indicates transition of a supply voltage from the host connected to the USB-A connector 151 side to the reader/writer control unit 150. When the power supply starts, it is set to 3.3 V.
(2) Vcc_b indicates transition of a supply voltage from the host connected to the USB-micro B connector 161 side to the reader/writer control unit 150. When the power supply starts, it is set to 3.3 V.
(3) RESET indicates transition of a RESET signal which is input from the IC reset unit 163 to the reader/writer control unit 150. A low level is maintained in a state in which the RESET signal is not input, but when the RESET signal is input, a signal value is set to be high for a predetermined period of time.
(4) GPIO indicates transition of a GPIO signal which is input from the microcomputer (MCU) 164 to the GPIO unit of the reader/writer control unit 150. A high or low signal is input to the GPIO unit of the reader/writer control unit 150 according to control of the microcomputer 164.

First, the signal transition diagram illustrated in Fig. 10 will be described.

Fig. 10 is a signal transition diagram when the power supply host for the USB reader/writer 100 is connected to the USB-A connector 151 of the USB reader/writer 100.

For example, it is a setting when the power supply host such as the PC is connected to the USB-A connector 151 of the USB reader/writer 100.

Specifically, it corresponds to, for example, a setting when a PC is connected to the SB-A connector 151 side, a camera or the like is connected to the USB-micro B connector 161 side, and input and output of data are performed between the PC and the camera.

At a time t1 illustrated in Fig. 10, the power supply host is connected to the USB-A connector 151 of the USB reader/writer 100. In this case, at the time t1, power of 3.3 V starts to be supplied from the host connected to the USB-A connector 151 to the power supply unit (Vcc_a) of the reader/writer control unit 150.

The USB reader/writer 100 verifies an input signal value of the GPIO unit of the reader/writer control unit 150 according to the power supply.

A GPIO input value is confirmed to be a low signal, and then data input/output control according to an instruction of the host connected to the USB-A connector 151 of the USB reader/writer 100 starts.

Next, the signal transition diagram illustrated in Fig. 11 will be described.

Fig. 11 is a signal transition diagram when the power supply host for the USB reader/writer 100 is connected to the USB-micro B connector 161 of the USB reader/writer 100.

Specifically, it corresponds to a setting when the smart phone or the like is connected to the USB-B connector 161 of the USB reader/writer 100, and the micro SD card is mounted into the card slot unit of the USB-A connector 151.

At a time t1 illustrated in Fig. 11, the power supply host is connected to the USB-micro B connector 161 of the USB reader/writer 100. In this case, at the time t1, power of 3.3 V starts to be supplied from the host connected to the USB-micro B connector 161 to the power supply unit (Vcc_b), the IC reset unit 163, and the microcomputer (MCU) 164 of the reader/writer control unit 150.

After the power supply starts, a process is performed in the order of steps (S1) to (S3) to be described below.

(S1) When the power of 3.3 V starts to be supplied from the host connected to the USB-micro B connector 161, the microcomputer (MCU) 164 outputs a high signal to the GPIO unit of the reader/writer control unit 150 (a time t2 in Fig. 11).

(S2) When a predetermined period of time (t2 to t3) elapses after the power of 3.3 V starts to be supplied from the host connected to the USB-micro B connector 161, the IC reset unit 163 outputs the reset signal to the reset signal input unit of the reader/writer control unit 150 (RESET signal = High in Fig. 11(3)) (the time t3 in Fig. 11).

(S3) The reader/writer control unit 150 confirms that an input to the GPIO unit is maintained to be a high signal according to an input of the reset signal from the IC reset unit 163 (a time t4 in Fig. 11).

The reader/writer control unit 150 confirms that the GPIO input value is the high signal, and then starts the data input/output control according to the instruction of the host connected to the USB-micro B connector 161 of the USB reader/writer 100.

Here, in the state in which the GPIO input value is the high signal, the reader/writer control unit 150 performs the transfer control of data of different categories (the non-record/reproduction data using a medium and the non-record/reproduction data such as the authentication command) using the two data transfer units described above with reference to Figs. 6 and 7. In other words, performed is the data transfer control using the following two data transfer units:

(1) themass storage class (MSC) supporting data transfer unit 110; and
(2) the non-mass storage class (MSC) supporting data transfer unit 120.

In other words, in a setting in which the GPIO input value is the low signal, the reader/writer control unit 150 performs the data transfer control using a single data transfer unit, similarly to the related art, but in a setting in which the GPIO input value is the high signal, the reader/writer control unit 150 performs the data transfer control using the following two data transfer units:

(1) themass storage class (MSC) supporting data transfer unit 110; and
(2) the non-mass storage class (MSC) supporting data transfer unit 120.

Specifically,

(1) the transfer control of the record/reproduction data for the recording medium 200 using the mass storage class (MSC) supporting data transfer unit 110 is performed, and
(2) the data transfer of the authentication command, the authentication data, and other security information using the non-mass storage class (MSC) supporting data transfer unit 120 is performed as well.

The setting in which the GPIO input value is the high signal is performed, for example, when the power supply host is connected to the USB-micro B connector 161, and a recording medium is mounted into a recording medium mounting unit set on the USB-A connector 151 side. When such a setting is detected, the reader/writer control unit 150 performs different types of data transfer using the following two data transfer units:

(1) themass storage class (MSC) supporting data transfer unit 110; and
(2) the non-mass storage class (MSC) supporting data transfer unit 120.

[5. Exemplary configuration and exemplary process of host connected with USB reader/writer]

Next, an exemplary configuration and an exemplary process of the host connected with the USB reader/writer will be described.

An exemplary configuration to be described below is a configuration for a data transfer process performed between the USB reader/writer 100 and the information processing device 300 in which Android (registered trademark) is installed as an OS such as the smart phone.

The following three exemplary configurations will be described in order:

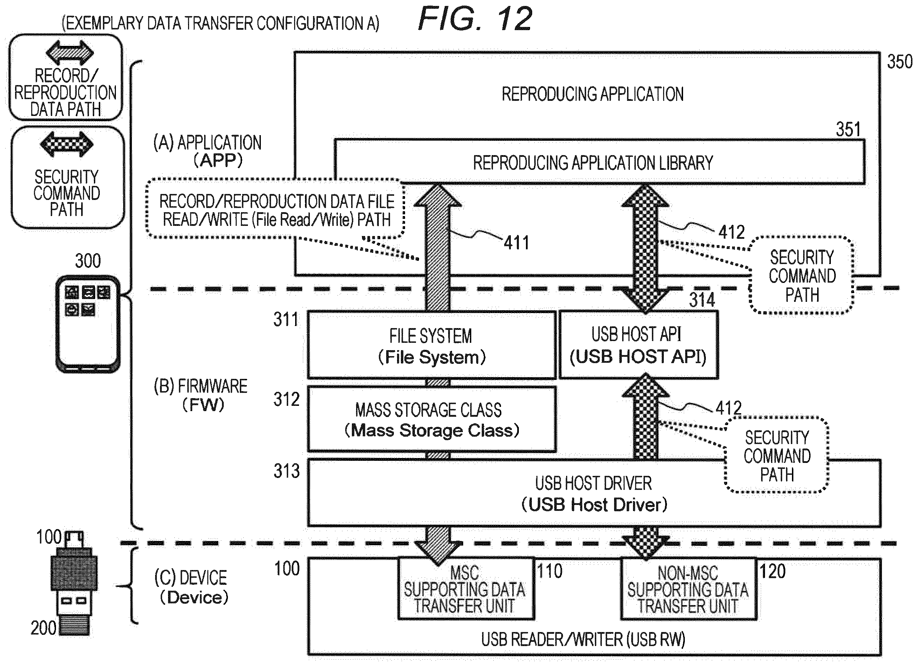

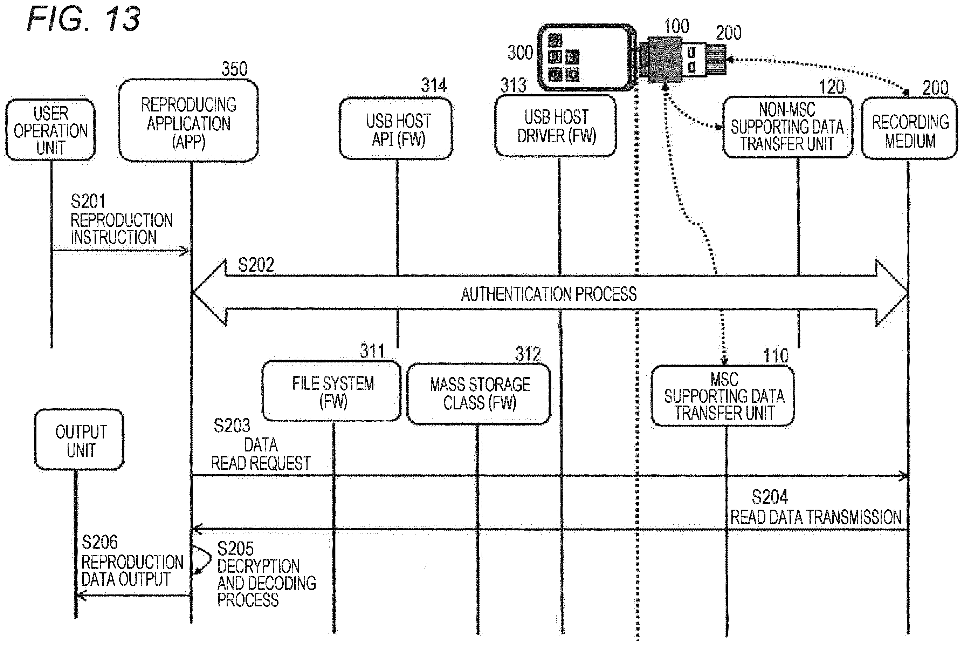

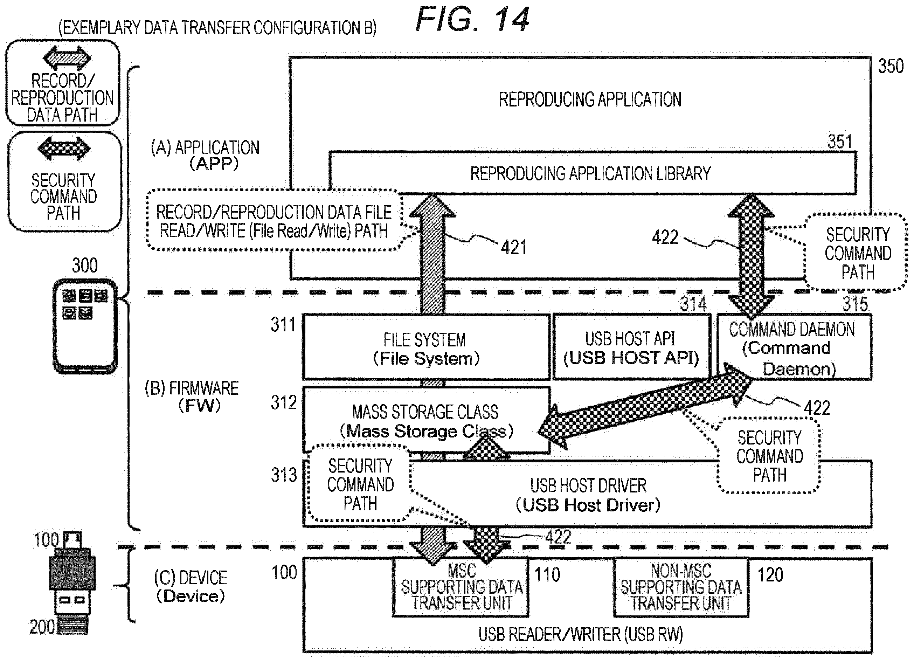

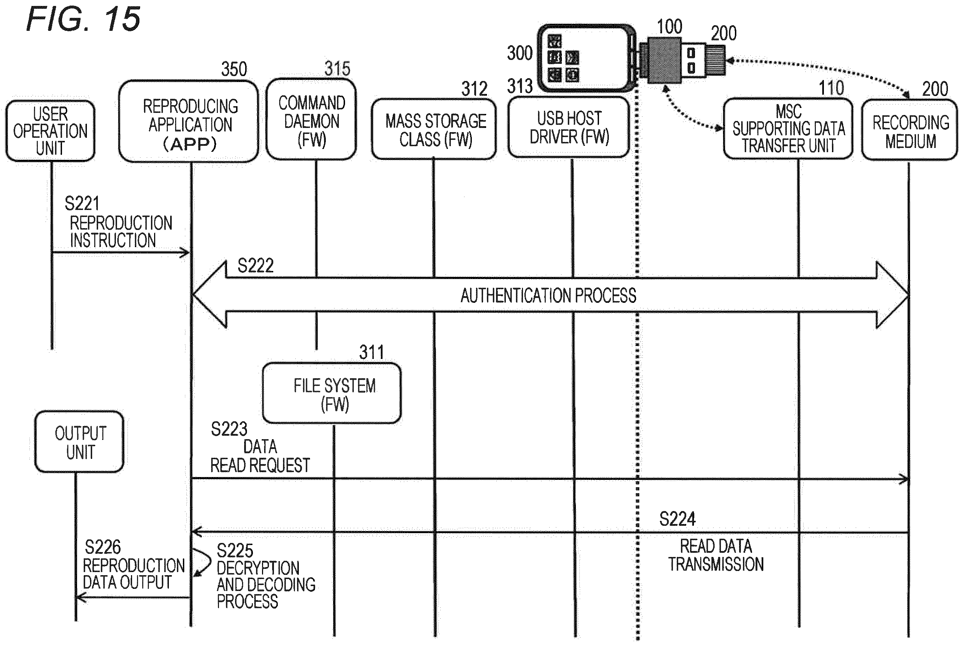

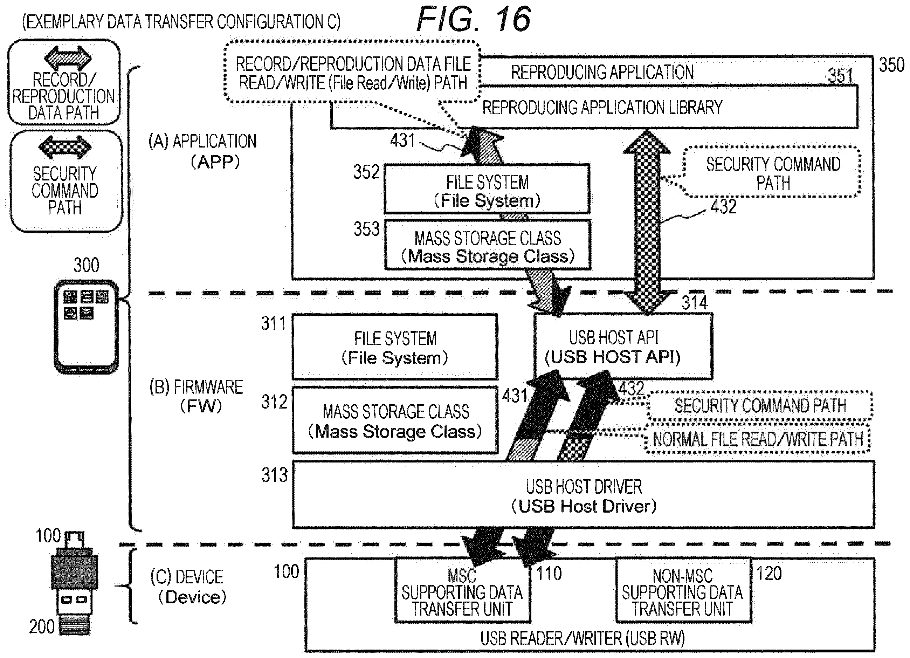

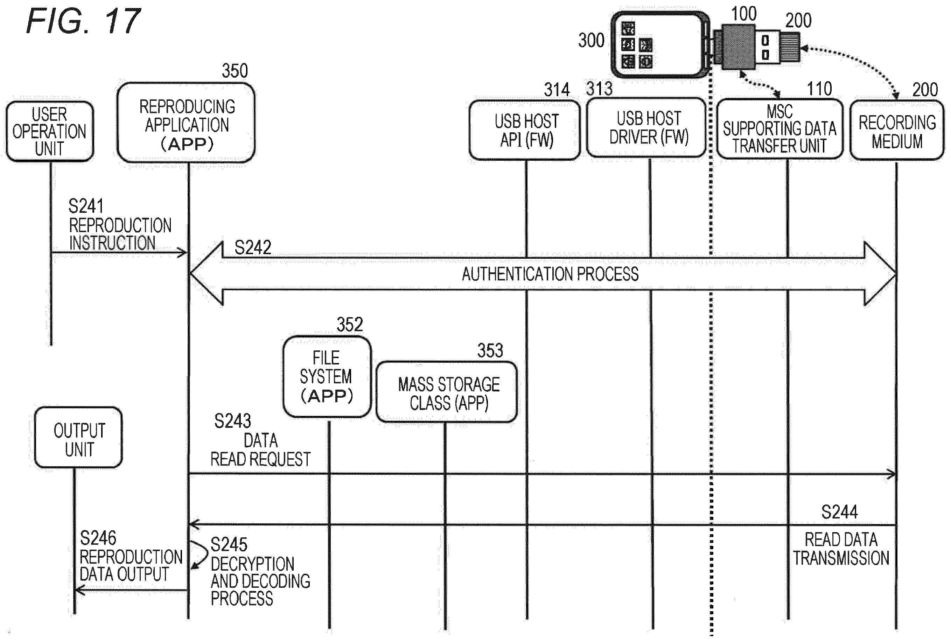

(1) an exemplary configuration A (Figs. 12 and 13);
(2) an exemplary configuration B (Figs. 14 and 15) ; and
(3) an exemplary configuration C (Figs. 16 and 17).

[5-1. Exemplary configuration A]

An exemplary data transfer configuration (exemplary configuration A) according to the present disclosure will be described with reference to Fig. 12.

Fig. 12 illustrates the process layer of the information processing device 300 equipped with the USB reader/writer 100 such as the smart phone, similarly to the layer configuration described above with reference to Fig. 4.

The process layer of the information processing device 300 is greatly divided into the following two layers:

(A) an application (APP) layer; and
(B) a firmware (FW) layer.

(A) The application (APP) layer is a layer of a program which can be downloaded from various application provision sites and easily added, for example additionally recorded, changed, or deleted through the information processing device 300.

On the other hand, (B) the firmware (FW) layer is a layer of a program which is recorded in the information processing device 300 basically as a fixed program.

Further, although not illustrated, an OS layer including an Android (registered trademark) OS serving as an OS is positioned between (A) the application layer and (B) the firmware layer of Fig. 12.

Here, some components of (B) the firmware layer, for example, a file system 313 and a mass storage class 312 may be interpreted as a part of the OS layer.

Further, components such as a program in the layers illustrated in Fig. 12 are only some components used in a process according to the present disclosure.

For example, various applications can be installed in the information processing device 300, but only one application which is directly associated with a process of the present disclosure is shown in (A) the application (APP) layer of Fig. 12.

An application shown in (A) the application (APP) layer of Fig. 12 is a reproducing application 350 that reads content stored in a medium and performs a reproduction process.

The reproducing application 350 performs an authentication process with a medium having content stored therein according to a predetermined algorithm which is specified in advance, and reads content from the medium and performs a reproduction process only when the authentication is successfully performed.

Specifically, the reproducing application 350 may be configured with a SeeQVault (SQV) player or the like serving as an application that performs content reproduction, for example, according to a SQV which is a standard of a next generation copyright protection technique.

Further, the SQV is a standard that implements content use management allowing a process to be performed under predetermined use management when use-restricted content, for example, copyright management target content is recorded in a flash memory such as a SD card and reproduced.

The reproducing application 350 is unable to reproduce content from a medium when the authentication process with the medium having content stored therein is not successfully performed.

When the authentication process is successfully performed, and validity of the medium is confirmed, it is possible to read content from the medium and reproduce the content.

The reproducing application 350 includes a reproducing application library (for example, SQV library) 351.

The reproducing application library 351 is a component of the reproducing application 350, that is, a logic installation unit in which various processing logics of executing the reproducing application 350 are installed.

The reproducing application 350 is an application that operates on Android (registered trademark) serving as an OS.

(B) The firmware (FW) layer is a software layer which is recorded in the information processing device 300 basically as a fixed program.

Further, Fig. 12 illustrates some firmware used in a process of the present disclosure.

Fig. 12 illustrates the file system 311, the mass storage class 312, a USB host driver 313, and a USB host API 314.

The file system 311 is a component that constitutes the firmware (FW) layer of the information processing device 300 which is an Android (registered trademark) terminal and serves a program that implements a data read/write function on the recording medium 200, for example, the micro SD card according to a predetermined file system regulation. For example, the file system 311 performs reading and writing of data according to a file system regulation such as FAT32 or exFAT.

The mass storage class (MSC) 312 is a component that constitutes the firmware (FW) layer of the information processing device 300 which is an Android (registered trademark) terminal and serves as a program that performs a mass storage class host function.

The mass storage class (MSC) is a specification for a connection with a secondary storage device such as a USB memory which is defined in a USB standard. The mass storage class is a driver program that recognizes a USB device connected to an information processing device as a storage device and performs storage device control.

A device having the mass storage class (MSC) installed therein can recognize a connected USB device as a removable medium and record or read data without installation of a dedicated driver corresponding to a medium which is externally connected.

The USB host driver 313 is a component that constitutes the firmware (FW) layer of the information processing device 300 which is an Android (registered trademark) terminal and has a general-purpose function in a USB such as insertion/extraction detection of a USB device.

The USB host API 314 is a component that can be used in Android (registered trademark) 3.1 or later as described above with reference to Fig. 5, that is, an API that has a USB host function, that is, a control function for a USB device and provides a data transfer control function between a USB device and an application.

In the configuration illustrated in Fig. 12, the USB device is the USB reader/writer 100 into which a medium (the recording medium 200) is mounted, and the USB host API 314 can control the USB reader/writer 100 into which the recording medium 200 is mounted.

(C) A device illustrated on the bottom layer of Fig. 12 is the USB reader/writer (USB R/W) 100. The USB reader/writer 100 includes the following two data transfer units:

(1) themass storage class (MSC) supporting data transfer unit 110; and
(2) the non-mass storage class (MSC) supporting data transfer unit 120,

as illustrated in Fig. 12.

Further, as described above, the two data transfer units are configured physically as one data transfer unit but are two logical data transfer units which transfer data of different categories.

Both of the two data transfer units perform the data transfer with the information processing device 300 through the USB-micro B connector of the USB reader/writer 100.

The recording medium 200 such as the micro SD card is mounted into the card slot on one USB-A connector side.

As an example, the non-mass storage class (MSC) supporting data transfer unit 120 may be configured with, for example, a vendor unique class supporting data transfer unit or a HID class supporting data transfer unit.

The USB reader/writer (USB R/W) 100 includes the following two connectors:

(a) the USB-A connector; and
(b) the USB-micro B connector.

Thus, two connection states can be set in the information processing device 300 such as the smart phone:

(a) a state in which the USB-A connector is connected; and
(b) a state in which the USB-micro B connector is connected.

Further,

(b) in the state in which the USB-micro B connector is connected,
the following two states can be set on the USB-A connector side:

(b1) a state in which the recording medium 200 such as the micro SD card is inserted; and
(b2) a state in which any other device is connected.

Here, a process when the setting of the USB reader/writer (USB R/W) 100 is the state (b1), that is, the connection state in which the USB-micro B connector is connected to the information processing device 300 such as the smart phone, and the recording medium 200 such as the micro SD card is inserted into one USB-A connector side will be described.

The reproducing application 350 performs the authentication process with a medium having content stored therein, that is, the recording medium 200 such as the micro SD card mounted into the USB reader/writer 100 according to a predetermined algorithm which is specified in advance, and reads content from the recording medium 200 and performs the reproduction process only when the authentication is successfully performed.

The information processing device 300 such as the smart phone illustrated in Fig. 12 is the information processing device 300 inwhichAndroid (registeredtrademark) is installed as an OS.

In the Android (registered trademark) terminal described above with reference to Fig. 4 and the like, when a device having a USB port is recognized to be a memory device, a setting is performed such that a process of recording data in the memory device or reading data from the memory device is permitted, and for example, input and output of a command other than read/write data is not permitted.

In other words, when the mass storage class (MSC) of the firmware layer recognizes that a connected USB device is a storage device, all applications in the application layer are prohibited from performing, for example, input and output of a command other than read/write data according to OS-based control.

However, in the configuration of the present disclosure illustrated in Fig. 12, the reproducing application 350 (of the information processing device 300) that serves as a USB host and operates on Android (registered trademark) implements transfer of the record/reproduction data with the recording medium 200 and transfer of the command used in the authentication process using the two data transfer units of the USB reader/writer 100 serving as the USB device.

In other words, the record/reproduction data is transferred to the recording medium 200 through a record/reproduction data path 411 illustrated in Fig. 12, and the command or the like used in the authentication process is transferred through a security command path 412 illustrated in Fig. 12.

Thus, the reproducing application 350 can perform the authentication process with the recording medium 200 such as the micro SD card mounted into the reader/writer 100 via the security command path 412 and perform reading of data from the recording medium 200 via the record/reproduction data path 411 and reproduction of the read data after the authentication process is successfully performed.

The record/reproduction data path 411 is transmission/reception path of a record/reproduction data file between the reproducing application 350 and the recording medium 200 such as the micro SD card.

The security command path 412 is a path of a command that is transmitted and received in, for example, the authentication process between the reproducing application 350 and the recording medium 200.

The record/reproduction data path 411 has the following path:

the recording medium 200 - the mass storage class (MSC) supporting data transfer unit 110 of the USB reader/writer 100 - the USB host driver 313 - the mass storage class (MSC) 312 - the file system 311 - the reproducing application 350.

The record/reproduction data is transferred between the recording medium 200 and the reproducing application 350 via the record/reproduction data path 411.

Further, the security command path 412 has the following path:

the recording medium 200 - the non-mass storage class (MSC) supporting data transfer unit 120 of the USB reader/writer 100 - the USB host driver 313 - the USB host API 314 - the reproducing application 350.

For the authentication command and the authentication data which are transmitted and received in the authentication process between the reproducing application 350 and the recording medium 200, data transfer between the recording medium 200 and the reproducing application 350 is performed via the security command path 412.

Further, data transfer of two different types of the record/reproduction data and the security command can be implemented by both control of the reader/writer control unit 150 of the USB reader/writer 100 and control of the reproducing application 350 of the information processing device 300.

When it is a setting in which a GPIO input is high as described above with reference to Figs. 9 and 11, the reader/writer control unit 150 of the USB reader/writer 100 performs the data transfer control such that the data transfer of the two different types using the following two data transfer units is permitted:

(1) the mass storage class (MSC) supporting data transfer unit 110; and
(2) the non-mass storage class (MSC) supporting data transfer unit 120.

Further, the reproducing application 350 of the information processing device 300 performs the authentication process with the recording medium 200 prior to data reading from the recording medium 200 mounted into the USB reader/writer 100 and the reproduction process. At the time of the authentication process, transmission and reception of the authentication command through the USB host API 314 are performed.

As described above, the reproducing application 350 of the information processing device 300 first performs transmission and reception of the authentication command via the security command path 412, that is, the path involving the USB host API 314 and performs the authentication process with the recording medium 200.

When the authentication is established through the authenticationprocess, and validity of both sides is confirmed, the reproducing application 350 of the information processing device 300 reads data recorded in the recording medium 200 via the record/reproduction data path 411, and performs the reproduction process of the read data.

Next, a process sequence using the two paths illustrated in Fig. 12 will be described with reference to a sequence diagram illustrated in Fig. 13.

The sequence diagram illustrated in Fig. 13 is a sequence diagram for describing a process sequence when the information processing device 300 such as the smart phone performs the authentication process with the recording medium 200 mounted into the USB reader/writer 100, reads data (encrypted content) from the recording medium 200, decrypts the read encrypted content, and performs the reproduction process only when the authentication is successfully performed.

Respective process steps will be described below in order.

(Step S201)

First, in step S201, the user inputs a content reproduction instruction request through a user operation unit of the information processing device 300.

The request is input to the reproducing application 350 under control of the control unit of the information processing device 300.

(Step S202)

The reproducing application 350 starts the authentication process with the recording medium 200 having content stored therein according to an input of the content reproduction request by the user.

The authentication process is performed via the security command path 412 described above with reference to Fig. 12. In other words, various kinds of authentication commands, the authentication data, and the like which are necessary in the authentication process are transmitted and received between the reproducing application 350 and the recording device 200 via the security command path 412, and the authentication process is performed according to a specified authentication algorithm.

The security command path 412 is set as a path involving the following components:

(1) the reproducing application 350 of the information processing device 300;
(2) the USB host API 314 of firmware (FW) of the information processing device 300;
(3) the USB host driver 313 of firmware (FW) of the information processing device 300;
(4) the non-mass storage class (MSC) supporting data transfer unit 120 of the USB reader/writer 100;
(5) the recording medium 200.

The authentication command, the authentication data, and the like which are transmitted and received in the authentication process between the reproducing application 350 and the recording medium 200 are transferred via the security command path 412.

In step S202, the authentication process using the security command path 412 is performed, and step S203 and a process subsequent thereto are performed only when the authentication is established.

When the authentication is not established, step S203 and a process subsequent thereto are not performed. In other words, the process of reading data (the encrypted content) from the recording medium 200 and reproducing the data are not performed.

(Steps S203 and S204)

When the authentication is established in the authentication process of step S202, in steps S203 and S204, the reproducing application 350 performs the process of reading the record data (the encrypted content) of the recording medium 200.

The data reading process is performed via the record/reproduction data path 411 described above with reference to Fig. 12.

The record/reproduction data path 411 is set as a path involving the following components:

(1) the reproducing application 350 of the information processing device 300;
(2) the file system 311 of the firmware (FW) of the information processing device 300;
(3) the mass storage class 312 of the firmware (FW) of the information processing device 300;

(4) the USB host driver 313 of the firmware (FW) of the information processing device;
(5) the mass storage class (MSC) supporting data transfer unit 110 of the USB reader/writer 100; and
(6) the recording medium 200.

The transmission and reception of the record/reproduction data between the reproducing application 350 and the recording medium 200 are performed via the record/reproduction data path 411.

(Steps S205 and S206)

In step S205, the reproducing application 350 that has acquired the encrypted content for reproduction from the recording medium 200 in steps S203 and S204 performs the process of decrypting and decoding the encrypted content which is the acquired data, and in step S206, the reproducing application 350 outputs the reproduction data which is a result of the decryption and the decoding to an output unit (a display or a speaker).

[5-2. Exemplary configuration B]

Next, the exemplary configuration B will be described with reference to Figs. 14 and 15.
Fig. 14 illustrates the process layer of the information processing device 300 equipped with the USB reader/writer 100 such as the smart phone, similarly to the configuration of Fig. 12 described above in [Exemplary configuration A].
The process layer of the information processing device 300 is greatly divided into the following two layers:

(A) the application (APP) layer; and
(B) the firmware (FW) layer.

In the exemplary configuration B, a command daemon 315 is arranged in (B) the firmware (FW) layer.
The command daemon 316 is set as a component in the firmware (FW) of the Android (registered trademark) terminal and serves as a component that provides an application with an access function of accessing the USB device (the USB reader/writer 100 into which the recording medium 200 is mounted in this example) through another mass storage class 312 without going through the file system 311.
In other words, the command daemon 316 is a communication function provision component (program) that implements communication of the non-record/reproduction data such as the authentication command through the mass storage class 312.
In the exemplary configuration B, the authentication command and the authentication data are transferred between the reproducing application 350 of the information processing device 300 and the recording medium 200 using the command daemon 316.
Further, in the exemplary configuration B, one of the two data transfer units of the USB reader/writer 100, that is, only the mass storage class (MSC) supporting data transfer unit 110 is used.
All of the record/reproduction data and data such as the authentication command applied to the authentication process are transferred only through the mass storage class (MSC) supporting data transfer unit 110.
The reproducing application 350 performs the authentication process with a medium having content stored therein, that is, the recording medium 200 such as the micro SD card mounted into the USB reader/writer 100 according to a predetermined algorithm which is specified in advance, and reads content from the recording medium 200 and performs the reproduction process only when the authentication is successfully performed.
The information processing device 300 such as the smart phone illustrated in Fig. 14 is the information processing device 300 inwhichAndroid (registeredtrademark) is installed as an OS.
In the Android (registered trademark) terminal described above with reference to Fig. 4 and the like, when a device having a USB port is recognized to be a memory device, a setting is performed such that a process of recording data in the memory device or reading data from the memory device is permitted, and for example, input and output of a command other than read/write data is not permitted.
In other words, when the mass storage class (MSC) of the firmware layer recognizes that a connected USB device is a storage device, all applications in the application layer are prohibited from performing, for example, input and output of a command other than read/write data according to the OS-based control.
However, in the configuration of the present disclosure illustrated in Fig. 14, the reproducing application 350 (of the information processing device 300) that serves as a USB host and operates on Android (registered trademark) implements transfer of the command used in, for example, the authentication process with the recording medium 200 using the command daemon 315.
The reproducing application 350 transfers the record/reproduction data to the recording medium 200 through a record/reproduction data path 421 illustrated in Fig. 14 and transfers the command or the like used in the authentication process through a security command path 422 illustrated in Fig. 14.

The reproducing application 350 can perform the authentication process with the recording medium 200 such as the micro SD card mounted into the reader/writer 100 via the security command path 422 and perform reading of data from the recording medium 200 via the record/reproduction data path 421 and reproduction of the read data after the authentication process is successfully performed.

The record/reproduction data path 421 is transmission/reception path of a record/reproduction data file between the reproducing application 350 and the recording medium 200 such as the micro SD card.

The security command path 422 is a path of a command that is transmitted and received in, for example, the authentication process between the reproducing application 350 and the recording medium 200.

In the present exemplary configuration B, the record/reproduction data path 421 has the following path:

the recording medium 200 - the mass storage class (MSC) supporting data transfer unit 110 of the USB reader/writer 100 - the USB host driver 313 - the mass storage class (MSC) 312 - the file system 311 - the reproducing application 350.

The record/reproduction data is transferred between the recording medium 200 and the reproducing application 350 via the record/reproduction data path 421.

Further, security command path 422 has the following path:

the recording medium 200 - the mass storage class (MSC) supporting data transfer unit 110 of the USB reader/writer 100 - the USB host driver 313 - the mass storage class (MSC) 312 - the command daemon 315 - the reproducing application 350.

For the authentication command and the authentication data which are transmitted and received in the authentication process between the reproducing application 350 and the recording medium 200, data transfer between the recording medium 200 and the reproducing application 350 is performed via the security command path 422.

Next, a process sequence using the two paths illustrated in Fig. 14 will be described with reference to a sequence diagram illustrated in Fig. 15.

The sequence diagram illustrated in Fig. 15 is a sequence diagram for describing a process sequence when the information processing device 300 such as the smart phone performs the authentication process with the recording medium 200 mounted into the USB reader/writer 100, reads data (encrypted content) from the recording medium 200, decrypts the read encrypted content, and performs the reproduction process only when the authentication is successfully performed.

Respective process steps will be described below in order.

(Step S221)

First, in step S221, the user inputs a content reproduction instruction request through a user operation unit of the information processing device 300.

The request is input to the reproducing application 350 under control of the control unit of the information processing device 300.

(Step S222)

The reproducing application 350 starts the authentication process with the recording medium 200 having content stored therein according to an input of the content reproduction request by the user.

The authentication process is performed via the security command path 422 described above with reference to Fig. 14. In other words, various kinds of authentication commands, the authentication data, and the like which are necessary in the authentication process are transmitted and received between the reproducing application 350 and the recording device 200 via the security command path 422, and the authentication process is performed according to a specified authentication algorithm.

The security command path 422 is set as a path involving the following components:

(1) the reproducing application 350 of the information processing device 300;
(2) the command daemon 315 of the firmware (FW) of the information processing device 300;
(3) the mass storage class 312 of the firmware (FW) of the information processing device 300;
(4) the USB host driver 313 of firmware (FW) of the information processing device 300;
(5) themassstorageclass (MSC) supporting data transfer unit 110 of the USB reader/writer 100; and

(6) the recording medium 200.

The authentication command, the authentication data, and the like which are transmitted and received in the authentication process between the reproducing application 350 and the recording medium 200 are transferred via the security command path 422.

In step S222, the authentication process using the security command path 422 is performed, and step S223 and a process subsequent thereto are performed only when the authentication is established.

When the authentication is not established, step S223 and a process subsequent thereto are not performed. In other words, reading of data (the encrypted content) from the recording medium 200 and the reproduction process are not performed.

(Steps S223 and S224)

When the authentication is established in the authentication process of step S222, in steps S223 and S224, the reproducing application 350 performs the process of reading the record data (the encrypted content) of the recording medium 200.

The data reading process is performed via the record/reproduction data path 421 described above with reference to Fig. 14.

The record/reproduction data path 421 is set as a path involving the following components:

(1) the reproducing application 350 of the information processing device 300;
(2) the file system 311 of the firmware (FW) of the information processing device 300;
(3) the mass storage class 312 of the firmware (FW) of the information processing device 300;
(4) the USB host driver 313 of the firmware (FW) of the information processing device;
(5) themassstorageclass (MSC) supporting data transfer unit 110 of the USB reader/writer 100; and
(6) the recording medium 200.

The transmission and reception of the record/reproduction data between the reproducing application 350 and the recording medium 200 are performed via the record/reproduction data path 421.

(Steps S225 and S226)

In step S225, the reproducing application 350 that has acquired the encrypted content for reproduction from the recording medium 200 in steps S223 and S224 performs the process of decrypting and decoding the encrypted content which is the acquired data, and in step S226, the reproducing application 350 outputs the reproduction data which is a result of the decryption and the decoding to an output unit (a display or a speaker).

[5-3. Exemplary configuration C]

Next, the exemplary configuration C will be described with reference to Figs. 16 and 17.

Fig. 16 illustrates the process layer of the information processing device 300 equipped with the USB reader/writer 100 such as the smart phone, similarly to the configuration of Fig. 12 described above in [Exemplary configuration A].

The process layer of the information processing device 300 is greatly divided into the following two layers:

(A) the application (APP) layer; and
(B) the firmware (FW) layer.

In the exemplary configuration C, similarly to [Exemplary configuration A] described above with reference to Figs. 12 and 13, the data transfer is performed using the USB host API 314 set in (B) the firmware (FW) layer.

Here, in the exemplary configuration A, only the security command path 412 is set using the USB host API 314, but in [Exemplary configuration C], both a security command path 432 and a record/reproduction data path 431 are set as a path using the USB host API 314 as illustrated in Fig. 16.

Further, the USB host API 314 is a component that can be used in Android (registered trademark) 3.1 or later as described above with reference to Fig. 5, that is, an API that has a USB host function, that is, a control function for a USB device and provides a data transfer control function between a USB device and an application.

In the configuration illustrated in Fig. 16, the USB device is the USB reader/writer 100 into which a medium (the recording medium 200) is mounted, and the USB host API 314 can control the USB reader/writer 100 into which the recording medium 200 is mounted.

Further, the exemplary configuration C differs from the exemplary configurations A and B in that a file system 352 and a mass storage class 353 are set in the reproducing application 350 of (A) the application (APP) layer.
In the exemplary configuration C, when the record/reproduction data in the recording medium 200 is accessed, the file system 311 and the mass storage class 312 of (B) the firmware (FW) layer are not used, and the file system 352 and the mass storage class 353 in the reproducing application 350 of (A) the application (APP) layer are used.
When the information processing device 300 serving as the Android (registered trademark) terminal in which Android (registered trademark) is installed as an OS recognizes a device connected to the USB port to be a storage device and starts control by the mass storage class 353 of the FW under control of the OS, the mass storage class 353 of the FW limits transfer only to the record/reproduction data.
In order to prevent such a limitation, in the present exemplary configuration C, the file system 352 and the mass storage class 353 are set in the application layer, and access to (reading/writing of data from/to) the recording medium 200 is performed using the file system 352 and the mass storage class 353.
In the present exemplary configuration C, the record/reproduction data path 431 has the following path:

The recording medium 200 - the mass storage class (MSC) supporting data transfer unit 110 of the USB reader/writer 100 - the USB host driver 313 - the USB host API 314 - the reproducing application 350.

Further, the reproducing application 350 processes the reproduction data acquired from the recording medium 200 or generates the record data for the recording medium 200 using the mass storage class (MSC) 353 and the file system 352 in the reproducing application 350.
Further, the security command path 432 has the following path:

The recording medium 200 - the mass storage class (MSC) supporting data transfer unit 110 of the USB reader/writer 100 - the USB host driver 313 - the USB host API 314 - the reproducing application 350.

The authentication command, the authentication data, and the like which are transmitted and received in the authentication process between the reproducing application 350 and the recording medium 200 are transferred between the recording medium 200 and the reproducing application 350 via the security command path 432.
Next, a process sequence using the two paths illustrated in Fig. 16 will be described with reference to a sequence diagram illustrated in Fig. 17.
The sequence diagram illustrated in Fig. 17 is a sequence diagram for describing a process sequence when the information processing device 300 such as the smart phone performs the authentication process with the recording medium 200 mounted into the USB reader/writer 100, reads data (encrypted content) from the recording medium 200, decrypts the read data, and performs the reproduction process only when the authentication is successfully performed.
Respective process steps will be described below in order.

(Step S241)

First, in step S241, the user inputs a content reproduction instruction request through a user operation unit of the information processing device 300.
The request is input to the reproducing application 350 under control of the control unit of the information processing device 300.

(Step S242)

The reproducing application 350 starts the authentication process with the recording medium 200 having content stored therein according to an input of the content reproduction request by the user.
The authentication process is performed via the security command path 432 described above with reference to Fig. 16. In other words, various kinds of authentication commands, the authentication data, and the like which are necessary in the authentication process are transmitted and received between the reproducing application 350 and the recording device 200 via the security command path 432, and the authentication process is performed according to a specified authentication algorithm.
The security command path 432 is set as a path involving the following components:

(1) the reproducing application 350 of the information processing device 300;
(2) the USB host API 314 of firmware (FW) of the information processing device 300;
(3) the USB host driver 313 of firmware (FW) of the information processing device 300;
(4) the mass storage class (MSC) supporting data transfer unit 110 of the USB reader/writer 100; and

(5) the recording medium 200.

The authentication command, the authentication data, and the like which are transmitted and received in the authentication process between the reproducing application 350 and the recording medium 200 are transferred via the security command path 432.
In step S242, the authentication process using the security command path 432 is performed, and step S243 and a process subsequent thereto are performed only when the authentication is established.
When the authentication is not established, step S243 and a process subsequent thereto are not performed. In other words, reading of data (the encrypted content) from the recording medium 200 and the reproduction process are not performed.

(Steps S243 and S244)

When the authentication is established in the authentication process of step S242, in steps S243 and S244, the reproducing application 350 performs the process of reading the record data (the encrypted content) of the recording medium 200.
The data reading process is performed via the record/reproduction data path 431 described above with reference to Fig. 16.
the record/reproduction data path 431 is set as a path involving the following components:

(1) the reproducing application 350 of the information processing device 300 (including the file system 352 and the mass storage class 353);
(2) the USB host API 314 of firmware (FW) of the information processing device 300;
(3) the USB host driver 313 of the firmware (FW) of the information processing device;
(4) the mass storage class (MSC) supporting data transfer unit 110 of the USB reader/writer 100; and
(5) the recording medium 200.

The transmission and reception of the record/reproduction data between the reproducing application 350 and the recording medium 200 are performed via the record/reproduction data path 431.

(Steps S245 and S246)

In step S245, the reproducing application 350 that has acquired the encrypted content for reproduction from the recording medium 200 in steps S243 and S244 performs the process of decrypting and decoding the encrypted content which is the acquired data, and in step S246, the reproducing application 350 outputs the reproduction data which is a result of the decryption and the decoding to an output unit (a display or a speaker).

[6. Sequence of process of executing reproducing application in information processing device]

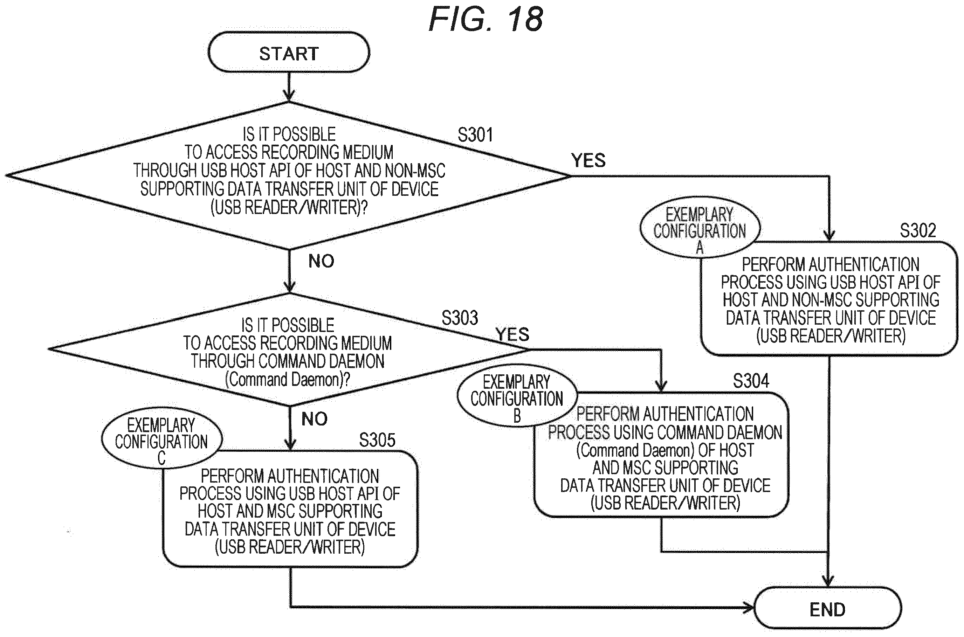

Next, a process sequence in which the reproducing application of the information processing device 300 starts the authentication process with the recording medium 200 according to the content reproduction request made by the user will be described with reference to a flowchart illustrated in Fig. 18.
The authentication process performed between the reproducing application 350 of the information processing device 300 and the recording medium 200 mounted into the USB reader/writer 200 is performed as a process using one of the three exemplary configurations A to C described above with reference to Figs. 12 to 17.
The flow illustrated in Fig. 18 is a flowchart for describing a process before the reproducing application 350 sequentially checks which of the exemplary configurations A to C is usable for a process using the security command path and starts the authentication process using the usable path.
Respective steps illustrated in the flow will be described in order.

(Step S301)

In step S301, the reproducing application 350 of the information processing device 300 determines whether or not it is possible to access the recording medium 200 mounted into the USB reader/writer 100 through the USB host API of the host (the information processing device 300) and the non-MSC supporting data transfer unit of the device (the USB reader/writer 100).
It is a process of determining whether or not the security command path 412 in [ExemplaryconfigurationA] described above with reference to Figs. 12 and 13 is usable.

Further, the determination process can be performed, for example, by a transmission process of transmitting the authentication command from the reproducing application 350 to the recording medium 200. An attempt to perform the transmission process of the authentication command is performed under the assumption that there is the security command path 412 illustrated in Fig. 12.
When the command transmission succeeds, Yes is determined in step S301, and the process proceeds to step S302.
When the command transmission fails, NO is determined in step S301, and the process proceeds to step S303.
Further, it may be determined whether or not the command transmission succeeds, for example, on the basis of the presence or absence of reception of a response (ACK) from the recording device.

(Step S302)

When Yes is determined in the determination process of step S301, and the process proceeds to step S302.
In step S302, the authentication process is performed using the USB host API of the host (the information processing device 300) and the non-MSC supporting data transfer unit of the device (the USB reader/writer 100).
It is the authentication process using the security command path 412 in [Exemplary configuration A] described above with reference to Figs. 12 and 13.

(Step S303)

When No is determined in the determination process of step S301, that is, when the authentication command transmission using the security command path 412 in [Exemplary configuration A] described above with reference to Figs. 12 and 13 fails, the process proceeds to step S303.
In step S303, the reproducing application 350 of the information processing device 300 determines whether or not it is possible to access the recording medium 200 mounted into the USB reader/writer 100 through the command daemon.
It is a process of determining whether or not it is possible to use the security command path 422 in [Exemplary configuration B] described above with reference to Figs. 14 and 15.
Further, the determination process can be performed, for example, by a transmission process of transmitting the authentication command from the reproducing application 350 to the recording medium 200. An attempt to perform the transmission process of the authentication command involving the command daemon is performed under the assumption that there is the security command path 422 illustrated in Fig. 14.
When the command transmission succeeds, Yes is determined in step S303, and the process proceeds to step S304.
When the command transmission fails, No is determined in step S303, and the process proceeds to step S305.
Further, it may be determined whether or not the command transmission succeeds, for example, on the basis of the presence or absence of reception of a response (ACK) from the recording device.

(Step S304)

When Yes is determined in the determination process of step S303, the process proceeds to step S304.
In step S304, the reproducing application 350 performs the authentication process using the command daemon of the host (the information processing device 300) and the MSC supporting data transfer unit of the device (the USB reader/writer 100).
It is the authentication process using the security command path 422 in [ExemplaryconfigurationB] described above with reference to Figs. 14 and 15.

(Step S305)

When No is determined in the determination process of step S303, that is, when the authentication command transmission using the security command path 422 in [Exemplary configuration B] described above with reference to Figs. 14 and 15 fails, the process proceeds to step S305.
In step S303, the reproducing application 350 performs the authentication process using the USB host API of the host (the information processing device 300) and the MSC supporting data transfer unit of the device (the USB reader/writer 100) .
It is the authentication process using the security command path 432 in [ExemplaryconfigurationC] described above with reference to Figs. 16 and 17.
The reproducing application 350 of the information processing device 300 searches for a path in which the transfer of the authentication command succeeds and performs the authentication process using the successful path as described above.

Further, in the flow illustrated in Fig. 18, the exemplary sequence of sequentially determining whether or not the security command path is usable in the order of the exemplary configurations A, B, and C has been described, but an order of checking the path can be variously set. For example, a setting may be performed such that the path search is performed in various orders, for example, it may be determined whether or not the path is usable in the order of the exemplary configurations B, A, and C, or it may be determined as to whether or not the path is usable in the order of the exemplary configurations C, B, and A.

[7. Process when plurality of USB reader/writers are mounted in information processing device (host)]

In the above embodiment, the process when one USB reader/writer is mounted in the information processing device such as the smart phone has been described.

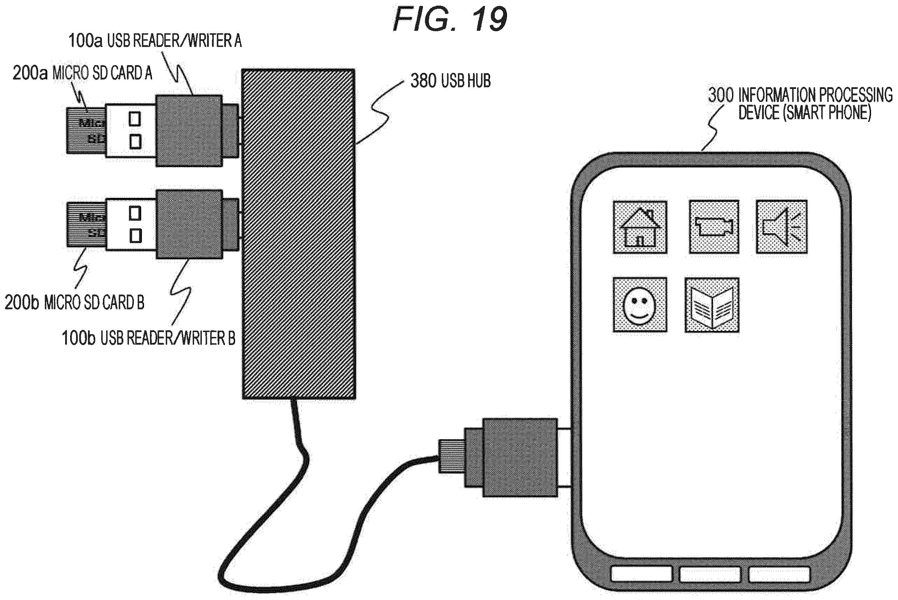

However, for example, there are cases in which a plurality of the USB reader/writers A 100a and B 100b are mounted in the information processing device (the smart phone) 300 serving as a host device via a USB hub 380 as illustrated in Fig. 19.

A recording medium A 200a such as the micro SD card is connected to the USB reader/writer A 100a, and a recording medium B 200b is mounted into the USB reader/writer B 100b.

When a plurality of USB reader/writers are connected to the information processing device (the smart phone) 300 as described above,
the following two paths are individually set to each of the USB reader/writers:

(1) the record/reproduction data path; and
(2) the security command path.

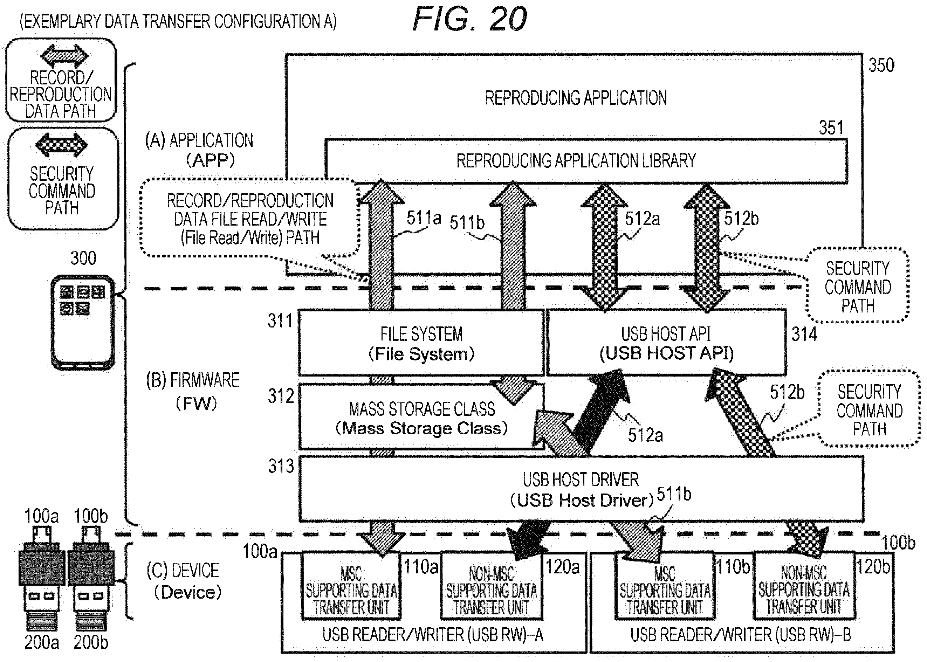

Fig. 20 illustrates an exemplary path setting when the two USB reader/writer A 100a and B 100b are mounted in the information processing device 300.

The exemplary path setting illustrated in Fig. 20 is a configuration to which a process layer similar to that in the "exemplary configuration A" described above with reference to Figs. 12 and 13 is applied.

The two USB reader/writer A 100a and B 100b mounted in the information processing device 300 are illustrated on the bottom layer.

The recording medium A 200a is connected to the USB reader/writer A 100a, and the recording medium B 200b is mounted in the USB reader/writer B 100b.

The reproducing application 350 of the information processing device 300 performs a process using the two USB reader/writers A 100a and B 100b selectively.

The following two paths are set and used as a communication path between the information processing device 300 and the USB reader/writer A 100a:

a record/reproduction data path 511a; and
a security command path 512a.

Similarly, the following two paths are set and used as a communication path between the information processing device 300 and the USB reader/writer B 100b:

a record/reproduction data path 511b; and
a security command path 512b.

The record/reproduction data path 511a has the following path between the information processing device 300 and the USB reader/writer A 100a:

the recording medium A 200a - the mass storage class (MSC) supporting data transfer unit 110a of the USB reader/writer A 100a - the USB host driver 313 - the mass storage class (MSC) 312 - the file system 311 - the reproducing application 350.

The record/reproduction data is transferred between the recording medium A 200a and the reproducing application 350 via the record/reproduction data path 511a.

Further, the security command path 512a between the information processing device 300 and the USB reader/writer A 100a has the following path:

the recording medium A 200a - the non-mass storage class (MSC) supporting data transfer unit 120a of the USB reader/writer A 100a - the USB host driver 313 - the USB host API 314 - the reproducing application 350.

The authentication command and the authentication data which are transmitted and received in the authentication process between the reproducing application 350 and the recording medium A 200a are transferred between the recording medium A 200a and the reproducing application 350 via the security command path 512a.

On the other hand, the record/reproduction data path 511b between the information processing device 300 and the USB reader/writer B 100b has the following path:

the recording medium B 200b - the mass storage class (MSC) supporting data transfer unit 110b of the USB reader/writer B 100b - the USB host driver 313 - the mass storage class (MSC) 312 - the file system 311 - the reproducing application 350.

The record/reproduction data is transferred between the recording medium B 200b and the reproducing application 350 via the record/reproduction data path 511b.

Further, the security command path 512b between the information processing device 300 and the USB reader/writer B 100b has the following path:

the recording medium B 200b - the non-mass storage class (MSC) supporting data transfer unit 120b of the USB reader/writer B 100b - the USB host driver 313 - the USB host API 314 - the reproducing application 350.

The authentication command and the authentication data which are transmitted and received in the authentication process between the reproducing application 350 and the recording medium B 200b are transferred between the recording medium B 200b and the reproducing application 350 via the security command path 512b.

As described above, the following two paths are set to each of the USB reader/writers:

the record/reproduction data path; and
the security command path,
, and thus a total of four paths are set.

The reproducing application 350 of the information processing device 300 acquires mounted device information for each of the four paths in order to determine a connected device (a mounted device) for which each path is set.

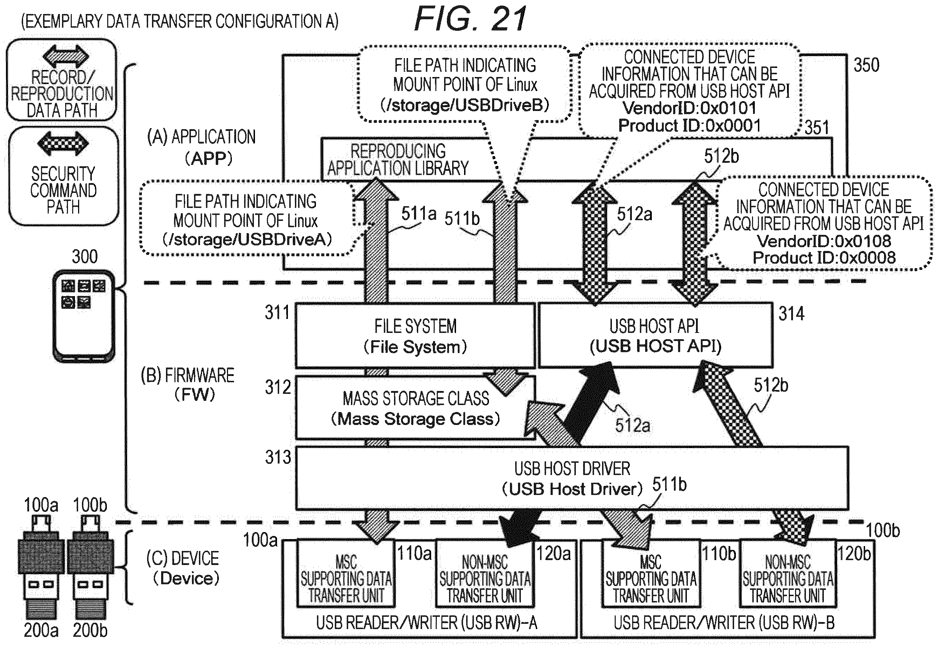

The mounted device information that can be acquired by the reproducing application 350 will be described with reference to Fig. 21.

First, the mounted device information related to the record/reproduction data paths 511a and 511b set between the reproducing application 350 and the USB reader/writer A 100a and between the reproducing application 350 and the USB reader/writer B 100b will be described.

The reproducing application 350 can acquire the mounted device information related to the record/reproduction data paths 511a and 511b from a Linux (registered trademark) system file used by an Android (registered trademark) OS.

The reproducing application 350 acquires information (the mounted device information) of a connection destination device of each of the record/reproduction data paths 511a and 511b with reference to the file system 311 of the firmware layer and the Linux (registered trademark) system file which is management information of the mass storage class 312.

For example, as illustrated in Fig. 21,
for the record/reproduction data path 511a set for the USB reader/writer A 100a,
a file path (/storage/USBDriveA) indicating a mounted point of Linux (registered trademark) is acquired with reference to the Linux (registered trademark) system file.

The record/reproduction data path 511a can be determined to be a connection path of a connected device of the mounted point = USBDriveA, that is, the USB reader/writer A 100a on the basis of the file path information.

Similarly, for the record/reproduction data path 511b set for the USB reader/writer B 100b,
a file path (/storage/USBDriveB) indicating the mounted point of Linux (registered trademark) is acquired with reference to the Linux (registered trademark) system file.

The record/reproduction data path 511b can be determined to be a connection path of a connected device of the mounted point = USBDriveB, that is, the USB reader/writer B 100b on the basis of the file path information.

Next, the mounted device information related to the security command paths 512a and 512b set between the reproducing application 350 and the USB reader/writer A 100a and between the reproducing application 350 and the USB reader/writer B 100b will be described.

The reproducing application 350 can acquire the mounted device information related to the security command paths 512a and 512b on the basis of connected device information which is acquired and managed by the USB host API 314.

The reproducing application 350 acquires the connected device information (the mounted device information) which is management information of the USB host API 314 of the firmware layer.

For example, as illustrated in Fig. 21,
for the security command path 512a set for the USB reader/writer A 100a, the following information related to the connected device (the USB reader/writer A 100a) is acquired as the connected device information from the USB host API 314 :

vendor ID = 0x0101; and
product ID = 0x0001.

It is possible to acquire the vendor ID and the product ID of the device connected to the security command path 512a from the connected device information.

Similarly, for the security command path 512b set for the USB reader/writer B 100b, the following information related to the connected device (the USB reader/writer B 100b) is acquired as the connected device information from the USB host API 314:

vendor ID = 0x0108; and
product ID = 0x0008.

It is possible to acquire the vendor ID and the product ID of the device connected to the security command path 512b from the connected device information.

As described above, the reproducing application 350 of the information processing device 300 can acquire
the connected device information corresponding to the two record/reproduction data paths 511a and 511b, and
the connected device information corresponding to the two security command paths 512a and 512b.

However, there is a problem in that it is unable to acquire the connected device information related to each of the two record/reproduction data paths 511a and 511b, the connected device information related to the two security command paths 512a and 512b, and correspondence information of different paths.

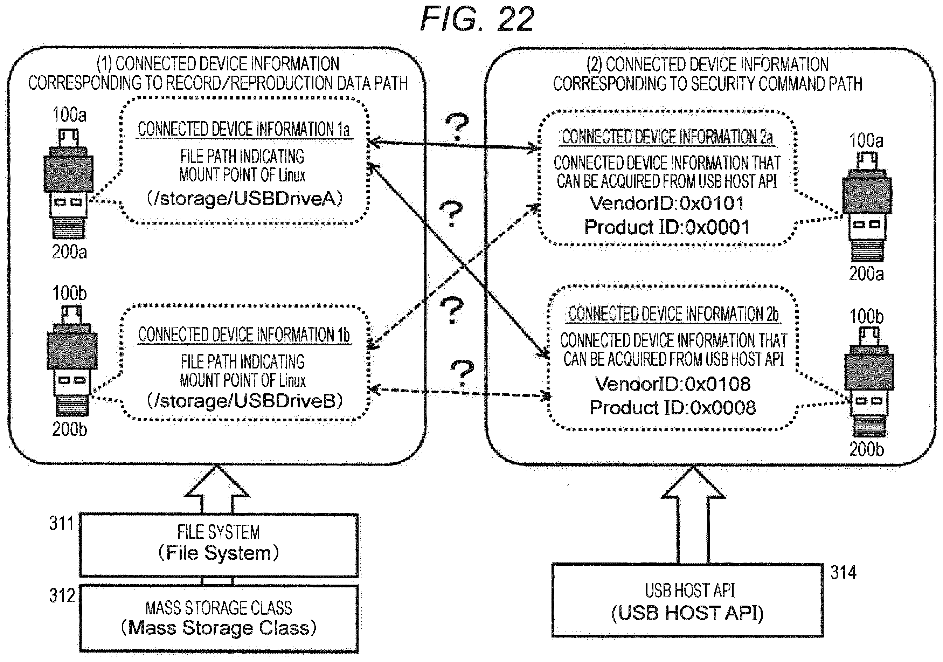

This problem will be described with reference to Fig. 22.

Fig. 22 illustrates the following connected device information:

(1) the connected device information of the record/reproduction data path; and
(2) the connected device information of the security command path.

(1) The connected device information of the record/reproduction data path is device information acquired from the file system 311 and the mass storage class 312 and includes the following two pieces of connected device information:

[connected device information 1a] = (/storage/USBDriveA) which is the connected device information of the record/reproduction data path 511a illustrated in Figs. 20 and 21; and
[connected device information 1b] = (/storage/USBDriveB) which is the connected device information of the record/reproduction data path 511b illustrated in Figs. 20 and 21.

On the other hand, (2) the connected device information of the security command path is device information acquired from the USB host API 314 and includes the following two pieces of connected device information:

[connected device information 2a] = (vendor ID = 0x0101, product ID = 0x0001) which is the connected device information of the security command path 512a illustrated in Figs. 20 and 21; and
[connected device information 2b] = (vendor ID = 0x0108, product ID = 0x0008) which is the connected device information of the security command path 512b illustrated in Figs. 20 and 21.

As described above, the reproducing application 350 of the information processing device 300 can individually acquire the connected device information corresponding to the record/reproduction data path and the connected device information corresponding to the security command path.

However, information associating the connected device information corresponding to the record/reproduction data path with the connected device information corresponding to the security command path is not acquired.

For example, it is unable to determine that a device specified by [connected device information 1a] = (/storage/USBDriveA) for one record/reproduction data path illustrated in Fig. 22 (1) is a device specified by [connected device information 2a] (= (vendor ID = 0x0101, product ID = 0x0001)) which is the connected device information related to the security command path illustrated in Fig. 22(2) or a device specified by [connected device information 2b] (= (vendor ID = 0x0108, product ID = 0x0008)).

As described above, there is a problem in that it is unable to detect a correspondence between the record/reproduction data path and the security command path, that is, a combination of the record/reproduction data path and the security command path set for the same device.

When it is unable to detect the path correspondence, a situation in which a target device of the authentication process performed via the security command path and a device that communicates the record/reproduction data via the record/reproduction data path are set as different devices is likely to occur.

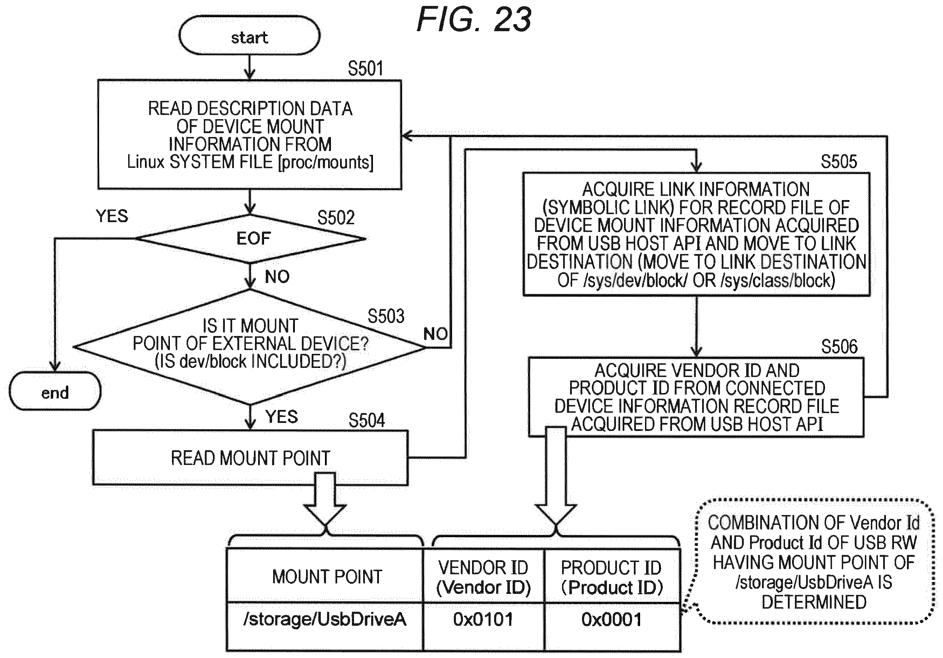

A process of solving this problem and detecting a correspondence between the record/reproduction data path and the security command path, that is, a combination of the record/reproduction data path and the security command path set for the same device will be described with reference to Fig. 23 and figures subsequent thereto.

A flowchart illustrated in Fig. 23 is a flowchart for describing a sequence of a path correspondence process of detecting a combination of the record/reproduction data path and the security command path which is performed through the reproducing application 350 of the information processing device 300.

In other words, it is a path correspondence process performed to confirm a combination of the record/reproduction data path and the security command path set for the same device.

Respective steps illustrated in the flow will be described in order.

(Step S501)

First, in step S501, the information processing device 300 reads description data of device mount information from the Linux (registered trademark) system file [proc/mounts].

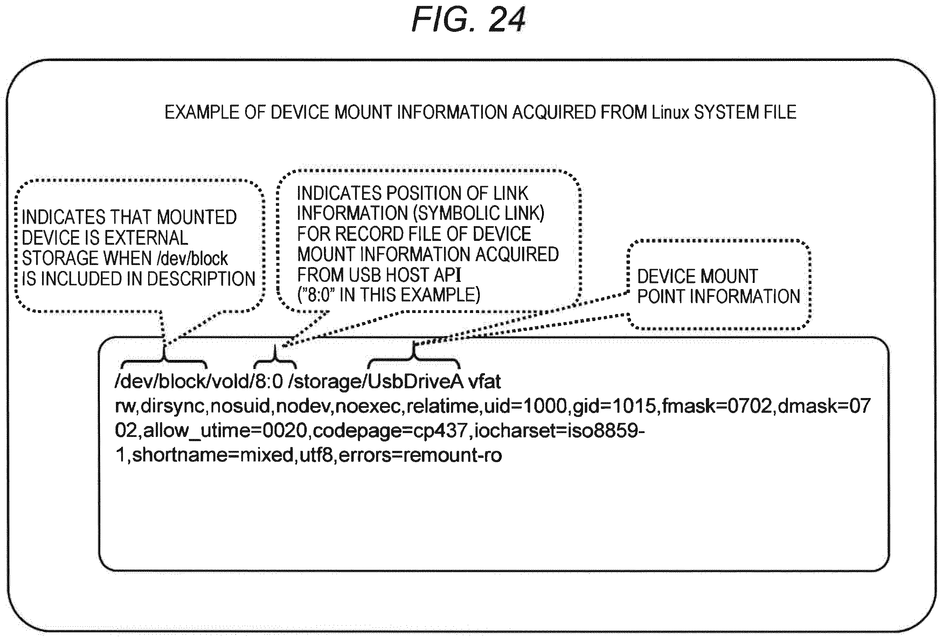

Fig. 24 illustrates an example of the description data of the device mount information included in the Linux (registered trademark) system file.

The description data of the device mount information includes the following data as illustrated in Fig. 24:

(1) data indicating whether or not the connected device (the mounted device) is an external storage (when description of /dev/block is included, it indicates an external storage) ;
(2) information indicating a position of link information (symbolic link) for a record file of the connected device information acquired from the USB host API (8:0 in an example of Fig. 24); and
(3) connected device point information (UsbDriveA).

Further, the Linux (registered trademark) system file [proc/mounts] includes a plurality of pieces of device mount information.

(Step S502)

In step S502, it is determined whether or not it reaches an end of the Linux (registered trademark) system file. When it reaches the end, the process ends.

When it does not reach the end, the process proceeds to step S503.

(Step S503)

Then, in step S503, the information processing device 300 determines whether or not the acquired description data of the device mount information is data related to an external device.

The description data of the device mount information includes data indicating whether or not the connected device (the mounted device) is an external storage (when description of /dev/block is included, it indicates an external storage) as described above with reference to Fig. 24.

It is determined whether or not the acquired description data of the device mount information is data related to an external device on the basis of the presence or absence of the data.

When the description data of the device mount information is not data related to an external device, the process returns to step S501.

When the description data of the devicemount information is data related to an external device, the process proceeds to step S504.

(Step S504)

When the description data of the devicemount information is determined to be data related to an external device in step S503, in step S504, the mounted point information is read from the description data of the device mount information.
A table illustrated in a lower portion of Fig. 23 illustrates an example of the read mounted point information. The following mounted point information is read:

```
mounted point information = [/storage/UsbDriveA].
```

The reproducing application 350 of the information processing device 300 stores the mounted point information in the memory, and further stores correspondence data between the vendor ID and the product ID which are the connected device information acquired in step S506 to be described below in the memory to be associated with the mounted point information acquired in step S504.

(Step S505)

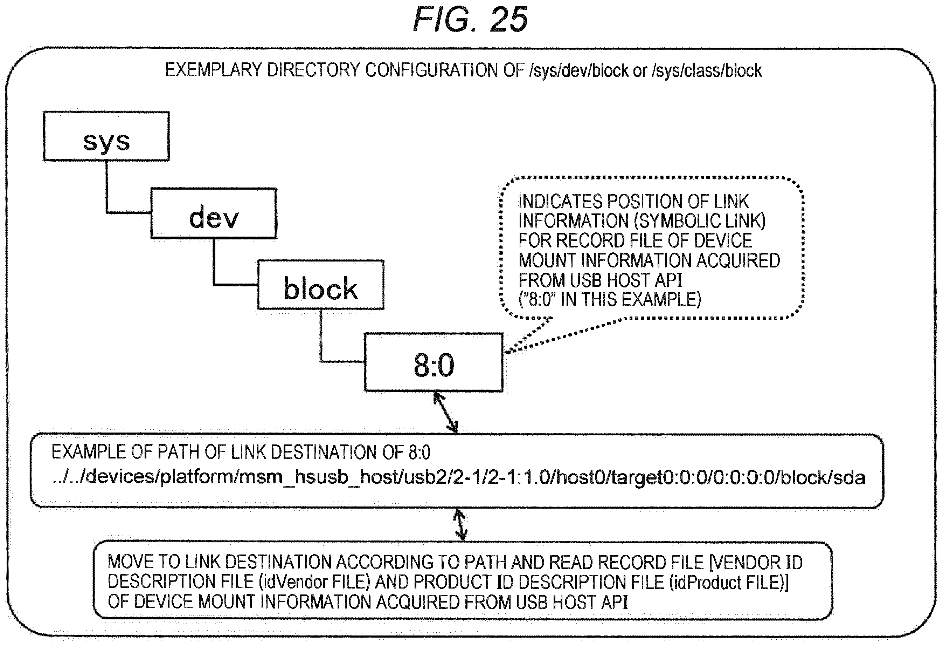

After the mounted point information acquired from the description data of the device mount information is stored in the memory in step S504, in step S505, record position information of the link information (symbolic link) is acquired from the description data of the same device mount information, the link information is acquired according to the acquired record position information, and a file is acquired using the acquired link information.
Position information indicating a position of the symbolic link acquired from the description data of the device mount information is a setting position of data in which the link information (the symbolic link) for the record file of the device mount information acquired from the USB host API is recorded.
A movement to a link destination (a movement to a link destination of /sys/dev/block/ or /sys/class/block) is performed according to the link information.
The description data of the device mount information includes "information indicating a position of link information (symbolic link) for a record file of the connected device information acquired from the USB host API (8:0 in the example of Fig. 24) " as described above with reference to Fig. 24.
The reproducing application 350 of the information processing device 300 acquires a record position of the link information (the symbolic link), acquires the link information, and acquires the record file of the device mount information acquired from the USB host API using the acquired link information.
The position information indicating a position of the link information (the symbolic link) acquired from the description data of the device mount information is [8:0] in the example of Fig. 24.
A setting configuration of the position information of the link information will be described with reference to Fig. 25.
Fig. 25 illustrates a part of a directory (sys/dev/block/8:0) which is a component of the Linux (registered trademark) file system.
The file 8:0 is a file derived from the position information indicating the position of the link information (the symbolic link) acquired from the description data of the device mount information.
The link information (the symbolic link) for the record file of the connected device information acquired from the USB host API is recorded in this file.
A path of a link destination indicated by the file 8:0 has, for example, the following setting:

[../../devices/platform/msm_hsusb_host/usb2/2-1/2-1 :1.0/host0/target0:0:0/0:0:0:0/block/sda].

The data processing unit of the information processing device 300 moves to the link destination according to the path, and reads the record file [a vendor ID description file (idVendor file) and a product ID description file (idProduct file)] of the device mount information acquired from the USB host API.

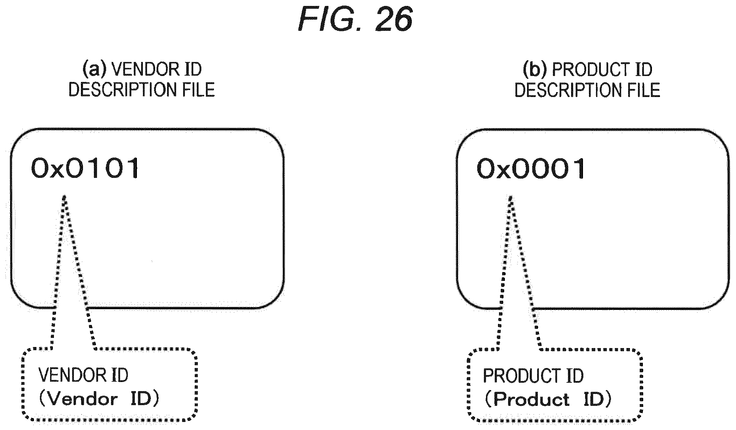

Fig. 26 illustrates an example of the read files.
Fig. 26 illustrates two files:

(a) the vendor ID description file; and
(b) the product ID description file.

The files are the record file of the device mount information acquired from the USB host API.
Data recorded in the vendor ID description file is the vendor ID (VendorID) = 0x0101 serving as the device mount information acquired from the USB host API.

Further, data recorded in the product ID description file is the product ID (ProductID) = 0x0001 serving as the device mount information acquired from the USB host API.

(Step S506)

The data processing unit of the information processing device 300 acquires the connected device information from each of the files illustrated in Fig. 26. In other words, the vendor ID and the product ID are acquired from the connected device information record file acquired from the USB host API.

The acquired connected device information is recorded in association with the mounted point acquired in step S204 as illustrated in in the lower portion of Fig. 23.

As a result of this process, as in the table illustrated in the lower portion of Fig. 23, the following two pieces of connected device information (device mount information) are associated with each other:

(1) the mounted point information serving as the connected device information obtained from the description data of the device mount information included in the Linux (registered trademark) system file [proc/mounts]; and
(2) the vendor ID (VendorID) and the product ID (ProductID) serving as the device mount information acquired from the USB host API.

In other words, the two pieces of connected device information can be determined to be the connected device information related to the same device.

Through this process, it is possible to accurately select the security command path connected to the same device as the connected device connected to one record/reproduction data path.

After the connected device information is associated, the information processing device performs the authentication process using the security command path, and transfers the record/reproduction data using the record/reproduction data path connected to the same device as the security command path.

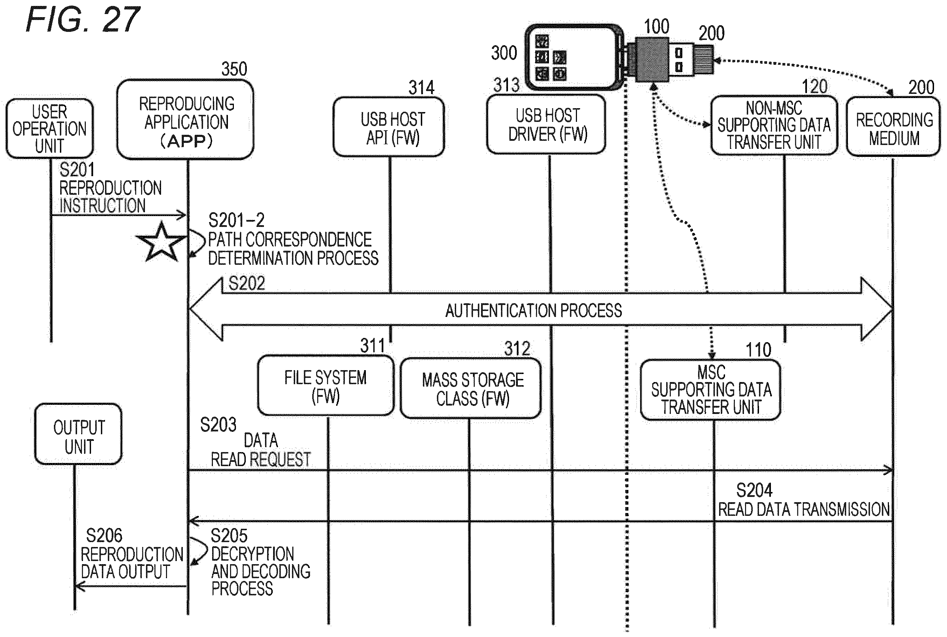

Fig. 27 is a diagram for describing a process sequence including the path correspondence determination process described above with reference to the flowchart of Fig. 23.

The sequence diagram illustrated in Fig. 27 is one in which the path correspondence determination process of step S201-2 is added to the sequence diagram described above with reference to Fig. 13.

In other words, Fig. 27 is a sequence diagram for describing a process performed in a configuration in which the record/reproduction data path is set as a path involving the file system 311 and the mass storage class 312, and the security command path is set as a path involving the USB host API.

It is a sequence diagram for describing a process sequence when a plurality of USB reader/writers are connected to the information processing device 300 such as the smart phone, one of the USB reader/writers is selected as a processing target, the authentication process with the recording medium connected to the selected USB reader/writer is performed, data (the encrypted content) is read from the recording medium, the read encrypted content is decrypted, and the reproduction process is performed only when the authentication is successfully performed.

Respective process steps will be described below in order.

(Step S201)

First, in step S201, the user inputs a content reproduction instruction request through a user operation unit of the information processing device 300.

The request is input to the reproducing application 350 under control of the control unit of the information processing device 300.

(Step S201-2)

Next, in step S201-2, the reproducing application of the information processing device 300 performs the path correspondence determination process according to the flowchart described above with reference to Fig. 23.

It is a process for detecting the security command path connected to the same device as the connected device (USB reader/writer) connected to one record/reproduction data path.

The security command path connected to the same device as the connected device (USB reader/writer) connected to one record/reproduction data path is selected through the path correspondence determination process performed in step S201-2.

Further, a process when the USB reader/writer A 100a illustrated in Fig. 20 is set as a processing target device, and the record/reproduction data path 511a and the security command path 512a are set as paths to be used will be described.

(Step S202)

Then, the reproducing application 350 starts the authentication process with the recording medium 200a having content stored therein using the security command path 512a selected in the path correspondence determination process performed in step S201-1.

The authentication process is performed using the security command path 512a having the same connected device as the connected device (the USB reader/writer A 100a) of the record/reproduction data path 511a applied to the transfer' of the record/reproduction data.

Further, the security command path 512a is set as a path that goes through the following components as described above with reference to Fig. 20:

(1) the reproducing application 350 of the information processing device 300;
(2) the USB host API 314 of firmware (FW) of the information processing device 300;
(3) the USB host driver 313 of firmware (FW) of the information processing device 300;
(4) the non-mass storage class (MSC) supporting data transfer unit 120a of the USB reader/writer A 100a; and
(5) the recording medium A 200a.

The authentication command and the authentication data which are transmitted and received in the authentication process between the reproducing application 350 and the recording medium A 200a are transferred via the security command path 512a.

In step S202, the authentication process using the security command path 512a is performed, and step S203 and a process subsequent thereto are performed only when the authentication is established.

When the authentication is not established, step S203 and a process subsequent thereto are not performed. In other words, the process of reading the data (the encrypted content) from the recording medium A 200a and reproducing the data are not performed.

(Steps S203 and S204)

When the authentication is established in the authentication process of step S202, in steps S203 and S204, the reproducing application 350 performs the process of reading the record data (the encrypted content) of the recording medium A 200a.

The data reading process is performed via the record/reproduction data path 511a described above with reference to Fig. 20.

The record/reproduction data path 511a is set as a path involving the following components:

(1) the reproducing application 350 of the information processing device 300;
(2) the file system 311 of the firmware (FW) of the information processing device 300;
(3) the mass storage class 312 of the firmware (FW) of the information processing device 300;
(4) the USB host driver 313 of the firmware (FW) of the information processing device;
(5) the mass storage class (MSC) supporting data transfer unit 110a of the USB reader/writer A 100a; and
(6) the recording medium A 200a.

The transmission and reception of the record/reproduction data between the reproducing application 350 and the recording medium A 200a are performed via the record/reproduction data path 511a.

(Steps S205 and S206)

In step S205, the reproducing application 350 that has acquired the encrypted content for reproduction from the recording medium A 200a in steps S203 and S204 performs the process of decrypting and decoding the encrypted content which is the acquired data, and in step S206, the reproducing application 350 outputs the reproduction data which is a result of the decryption and the decoding to an output unit (a display or a speaker).

[8. Exemplary configuration of information processing device]

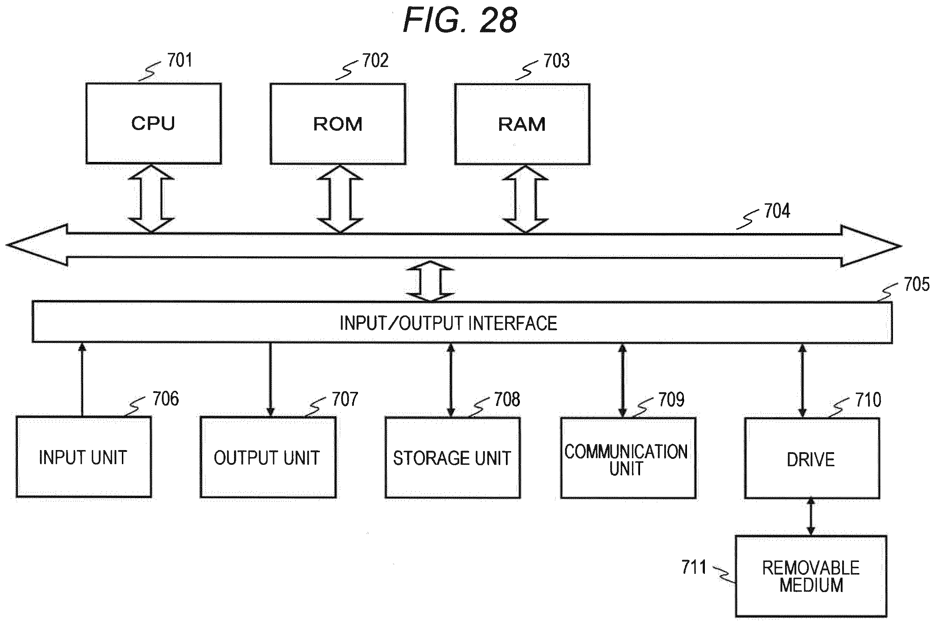

Finally, for example, an exemplary hardware configuration of the information processing device 300 configured with the smart phone or the like will be described with reference to Fig. 28.

A central processing unit (CPU) 701 functions as a data processing unit that performs various kinds of processes according to a program stored in a read only memory (ROM) 702 or a storage unit 708. For example, the process according to the sequence diagram or the flow described above in the above embodiment is performed.

Further, the components of the reproducing application and the firmware layer described above with reference to Fig. 12 and the like are also performed in the data processing unit.

A program executed by the CPU 701, data, and the like are stored in a random access memory (RAM) 703. The CPU 701, the ROM 702, and the RAM 703 are connected to one another via a bus 704.

The CPU 701 is connected to an input/output interface 705 via the bus 704, and an input unit 706 including various switches, a keyboard, a mouse, a microphone, and the like and an output unit 707 including a display, a speaker, and the like are connected to the input/output interface 705. The CPU 701 performs various kinds of processes according to an instruction input from the input unit 706 and outputs a processing result to, for example, the output unit 707.

The storage unit 708 connected to the input/output interface 705 includes, for example, a hard disk or the like, and stores a program executed by the CPU 701 and various kinds of data. The communication unit 709 functions as a unit that performs transmission and reception of data communication via a network such as the Internet or a local area network (LAN) and performs communication with an external device.

Further, the communication unit 709 includes a USB port, and the USB reader/writer is connectable to the communication unit 709. The USB reader/writer into which the recording device is mounted is connected and used in a communication process and the data transfer process with the recording device.

A drive 710 connected to the input/output interface 705 drives a removable medium 711 such as a magnetic disk, an optical disk, a magneto-optical disk, or a semiconductor memory such as a memory card, and records or reads data.

[9. Other embodiments]

In the above embodiment, the SQV supporting application (SQV player) that is performed only when the authentication with the medium having copyright management content stored therein is successfully performed has been described as an example of the reproducing application performed by the information processing device.

However, the process of the present disclosure can be also applied to other reproducing applications.

Specifically, the process of the present disclosure can be also applied to a process using a reproducing application that supports various digital right managements (DRMs) such as content protection of recordable media (CPRM) or Magic Gate.

Further, in the above embodiment, the exemplary configuration in which the recording medium having content stored therein is mounted into the USB reader/writer, and the content read from the recording medium via the USB reader/writer is reproduced has been described.

In other words, the exemplary configuration in which the authentication between the information processing device and the recording medium is performed, and content stored in the recording medium is transferred to the information processing device has been described.

However, the communication path between the recording medium having content recorded therein and the reproducing device that reproduces the content is not limited to the USB connection unit such as the USB port. For example, various communication paths such as Wi-Fi, Bluetooth (registered trademark), NFC, an earphone jack may be used.

Further, in the above embodiment, the configuration in which the recording medium is mounted into the USB reader/writer has been described. However, the process of the present disclosure can be applied to any other configuration, for example, a configuration using a USB memory in addition to the configuration in which the recording medium such as the SD card is combined with the USB reader/writer equipped with a medium mounting unit.

[10. Conclusion of configuration of present disclosure]

The embodiments of the present disclosure have been described above in detail with reference to the specific examples. However, it is obvious to those skilled in the art that modifications or substitutions can be made to the embodiments within the scope not departing from the gist of the present disclosure. In other words, the present invention is disclosed in an exemplary form and thus not interpreted to be limited thereto. The gist of the present disclosure has to be determined in view of claims set forth in the following.

Further, the technology disclosed in this specification may have the following configurations.

(1) A USB reader/writer device, including:

a recording medium mounting unit into which a recording medium is mountable;
a USB connector; and
a control unit that performs a data transfer process between the recording medium mounted into the recording medium mounting unit and a host connected to the USB connector,
wherein the control unit performs
transfer control of record/reproduction data for the recording medium using a mass storage class (MSC) supporting data transfer unit, and
transfer control of a security command for the recording medium using a non-mass storage class supporting data transfer unit.

(2) The USB reader/writer device according to (1),
wherein the USB reader/writer is configured to include a USB-A connector and a USB-micro B connector, and
the control unit performs data transfer of different types through the mass storage class supporting data transfer unit and the non-mass storage class supporting data transfer unit when a power supply host is connected to the USB-micro B connector.
(3) The USB reader/writer device according to (2),
wherein when the power supply host is connected to the USB-micro B connector, and the recording medium is mounted into the recording medium mounting unit set on the USB-A connector side,
the control unit performs data transfer of different types through the mass storage class supporting data transfer unit and the non-mass storage class supporting data transfer unit.
(4) The USB reader/writer device according to any of (1) to (3),
wherein the control unit detects an input signal to a general purpose input/output (GPIO) of the control unit, and performs process switching between execution of data transfer control using a single data transfer unit and execution of data transfer of different types through the mass storage class supporting data transfer unit and the non-mass storage class supporting data transfer unit according to a value of the input signal.
(5) The USB reader/writer device according to (4),
wherein the USB reader/writer device includes a micro computer unit (MCU) that inputs a signal to the GPIO of the control unit, and
the MCU changes the value of the input signal to the GPIO of the control unit when a power supply host is connected to the USB-micro B connector, and power supply from the power supply host is performed.
(6) The USB reader/writer device according to (4) or (5),
wherein the control unit checks the value of the input signal to the GPIO of the control unit after a reset signal is input to the control unit, and decides a data transfer control state according to the checked value of the input signal.
(7) The USB reader/writer device according to any of (1) to (6),
wherein the non-mass storage class supporting data transfer unit is configured as a vendor unique class supporting data transfer unit or a human interface device (HID) class supporting data transfer unit.
(8) An information processing device, including:

a communication unit that is connected with a device into which a recording medium is mounted; and
a data processing unit that executes a reproducing application that receives record data of the recording medium through the communication unit and reproduces the record data,
wherein the data processing unit performs a data transfer process using the following two paths:

(a) a record/reproduction data path in which record data of the recording medium is input; and
(b) a security command path in which a security command or security data other than the record data of the recording medium is transferred.

(9) The information processing device according to (8),
wherein the reproducing application
performs a authentication process with the recording medium through the data transfer process via the security command path, and
reads the record data of the recording medium through a data transfer via the record/reproduction data path and performs a reproduction process when the authentication process succeeds.
(10) The information processing device according to (8) or (9),
wherein the communication unit is a USB port, and
the recording medium is a recording device mounted into a USB reader/writer connected to the USB port.
(11) The information processing device according to (10),
wherein the data processing unit
receives the record data of the recording medium using the record/reproduction data path through a mass storage class which is a firmware component of the information processing device, and
transfers the security command or the security data using the security command path through a USB host API which is a firmware component of the information processing device.
(12) The information processing device according to (10) or (11),
wherein the data processing unit
receives the record data of the recording medium using a mass storage class supporting data transfer unit of the USB reader/writer, and
transfers the security command or the security data using a non-mass storage class supporting data transfer unit of the USB reader/writer.
(13) The information processing device according to any of (10) to (12),
wherein the data processing unit
receives the record data of the recording medium using the record/reproduction data path through a mass storage class which is a firmware component of the information processing device, and
transfers the security command or the security data using the security command path through a command daemon which is a firmware component of the information processing device.
(14) The information processing device according to any of (10) to (13),
wherein the data processing unit
receives the record data of the recording medium using the record/reproduction data path through a mass storage class which is a component of an application layer of the information processing device and a USB host API which is a firmware component of the information processing device, and
transfers the security command or the security data using the security command path through a USB host API which is a firmware component of the information processing device.
(15) The information processing device according to any of (8) to (14),
wherein the data processing unit
performs a path correspondence determination process of detecting the security command path connected to the same device as a device connected through one record/reproduction data path, and
performs an authentication process and a record/reproduction data transfer process using the security command path and the record/reproduction data path which are connected to the same device and selected on the basis of the path correspondence determination process.
(16) The information processing device according to (15),
wherein the path correspondence determination process is performed with referee to description information of a system file of the information processing device.
(17) A data transfer control method performed in a reader/writer device, the reader/writer device including a recording medium mounting unit into which a recording medium is mountable, a USB connector, and a control unit that performs a data transfer process between the recording medium mounted into the recording medium mounting unit and a host connected to the USB connector, the data transfer control method including:

performing, by the control unit,
transfer control of record/reproduction data for the recording medium using a mass storage class (MSC) supporting data transfer unit, and
transfer control of a security command for the recording medium using a non-mass storage class supporting data transfer unit.

(18) A data transfer control method performed in an information processing device, the information processing device including a communication unit that is connected with a device into which a recording medium is mounted and a data processing unit that executes a reproducing application that receives record data of the recording medium through the communication unit and reproduces the record data, the data transfer control method including:

performing, by the data processing unit, a data transfer process using the following two paths:

(a) a record/reproduction data path in which record data of the recording medium is input; and
(b) a security command path in which a security command or security data other than the record data of the recording medium is transferred.

(19) A program causing a reader/writer device to perform a data transfer control process, the reader/writer device including a recording medium mounting unit into which a recording medium is mountable, a USB connector, and a control unit that performs a data transfer process between the recording medium mounted into the recording medium mounting unit and a host connected to the USB connector, the program causing the control unit to execute:

transfer control of record/reproduction data for the recording medium using a mass storage class (MSC) supporting data transfer unit, and
transfer control of a security command for the recording medium using a non-mass storage class supporting data transfer unit.

(20) A program causing an information processing device to execute a data transfer control process, the information processing device including a communication unit that is connected with a device into which a recording medium is mounted and a data processing unit that executes a reproducing application that receives record data of the recording medium through the communication unit and reproduces the record data, the program causing the data processing unit to execute a data transfer process using the following two paths:

(a) a record/reproduction data path in which record data of the recording medium is input; and
(b) a security command path in which a security command or security data other than the record data of the recording medium is transferred.

Further, a series of processes described in this specific can be performed by hardware, software, or a combination of hardware and software. When a process by software is performed, it is possible to install a program having a process sequence recorded therein in a memory in a computer incorporated into dedicated hardware and execute the program, or it is possible to install the program in a general-purpose computer capable of executing various kinds of processes and execute the program. For example, the program may be recorded in a recording medium in advance. The program may be installed in a computer from a recording medium, or a program received via a network such as a LAN or the Internet may be installed in a recording medium such as an internal hard disk.

Further, various kinds of processes described in this specification may be performed chronologically according to a statement or may be performed in parallel or individually according to a processing capability of a device that performs a process or as necessary. Furthermore, a system in this specification is a logical set configuration of a plurality of devices and not limited to a configuration in which all the devices are arranged in the same housing.

## INDUSTRIAL APPLICABILITY

As described above, according to a configuration of an embodiment of the present disclosure, the configuration in which the record/reproduction data and the security command can be transferred between the host and the recording device connected to the host is implemented.

Specifically, the USB reader/writer includes the USB-A connector and the USB-micro B connector, and when the power supply host is connected to the USB-micro B connector, and the recording medium is mounted on the USB-A connector side, the reader/writer control unit transfers the record/reproduction data of the recording medium through the mass storage class supporting data transfer unit, and transfers the security command applied to the authentication process or the like through the non-mass storage class supporting data transfer unit. The host equipped with the USB reader/writer performs data transfer of different categories using the two paths, that is, the record/reproduction data path and the security command path.

Through the present configuration, the configuration in which the record/reproduction data and the security command can be transferred between the host and the recording device connected to the host is implemented.

## REFERENCE SIGNS LIST

10 USB reader/writer
11 USB-A connector
12 USB-micro B connector
13 Card slot
21 Micro SD card
30 Smart phone
32 Tablet terminal
41 PC
42 TV
43 Recording/reproducing device
50 Reproducing application
51 Reproducing application library
61 File system

62 Mass storage class
63 USB host driver
64 USB host API
71, 72 Record/reproduction data path
81, 82 Security command path
100 Information processing device
110 Mass storage class (MSC) supporting data transfer unit
120 Non-mass storage class (MSC) supporting data transfer unit
150 Reader/writer control unit
151 USB-A connector
152 Voltage converting unit
161 USB-micro B connector
162 Voltage converting unit
163 IC reset unit
164 Microcomputer
200 Recording medium
300 Information processing device
311 File system
312 Mass storage class
313 USB host driver
314 USB host API
315 Command daemon
350 Reproducing application
351 Reproducing application library
352 File system
353 Mass storage class
380 USB hub
411, 421, 431 Record/reproduction data path
412, 422, 432 Security command path
511a, 511b Record/reproduction data path
512a, 512b Security command path
701 CPU
702 ROM
703 RAM
704 Bus
705 Input/output interface
706 Input unit
707 Output unit
708 Storage unit
709 Communication unit
710 Drive
711 Removable medium

## Claims

**1.** A USB reader/writer device, comprising:

a recording medium mounting unit into which a recording medium is mountable;
a USB connector; and
a control unit that performs a data transfer process between the recording medium mounted into the recording medium mounting unit and a host connected to the USB connector,
wherein the control unit performs
transfer control of record/reproduction data for the recording medium using a mass storage class (MSC) supporting data transfer unit, and
transfer control of a security command for the recording medium using a non-mass storage class supporting data transfer unit.

**2.** The USB reader/writer device according to claim 1,
wherein the USB reader/writer is configured to include a USB-A connector and a USB-micro B connector, and
the control unit performs data transfer of different types through the mass storage class supporting data transfer unit and the non-mass storage class supporting data transfer unit when a power supply host is connected to the USB-micro B connector.

**3.** The USB reader/writer device according to claim 2,
wherein when the power supply host is connected to the USB-micro B connector, and the recording medium is mounted into the recording medium mounting unit set on the USB-A connector side,
the control unit performs data transfer of different types through the mass storage class supporting data transfer unit and the non-mass storage class supporting data transfer unit.

**4.** The USB reader/writer device according to claim 1,
wherein the control unit detects an input signal to a general purpose input/output (GPIO) of the control unit, and performs process switching between execution of data transfer control using a single data transfer unit and execution of data transfer of different types through the mass storage class supporting data transfer unit and the non-mass storage class supporting data transfer unit according to a value of the input signal.

**5.** The USB reader/writer device according to claim 4,
wherein the USB reader/writer device includes a micro computer unit (MCU) that inputs a signal to the GPIO of the control unit, and
the MCU changes the value of the input signal to the GPIO of the control unit when a power supply host is connected to the USB-micro B connector, and power supply from the power supply host is performed.

**6.** The USB reader/writer device according to claim 4,
wherein the control unit checks the value of the input signal to the GPIO of the control unit after a reset signal is input to the control unit, and decides a data transfer control state according to the checked value of the input signal.

**7.** The USB reader/writer device according to claim 1,
wherein the non-mass storage class supporting data transfer unit is configured as a vendor unique class supporting data transfer unit or a human interface device (HID) class supporting data transfer unit.

**8.** An information processing device, comprising:

a communication unit that is connected with a device into which a recording medium is mounted; and
a data processing unit that executes a reproducing application that receives record data of the recording medium through the communication unit and reproduces the record data,
wherein the data processing unit performs a data transfer process using the following two paths:

(a) a record/reproduction data path in which record data of the recording medium is input; and
(b) a security command path in which a security command or security data other than the record data of the recording medium is transferred.

**9.** The information processing device according to claim 8,
wherein the reproducing application
performs a authentication process with the recording medium through the data transfer process via the security command path, and
reads the record data of the recording medium through a data transfer via the record/reproduction data path and performs a reproduction process when the authentication process succeeds.

**10.** The information processing device according to claim 8,
wherein the communication unit is a USB port, and
the recording medium is a recording device mounted into a USB reader/writer connected to the USB port.

**11.** The information processing device according to claim 10,
wherein the data processing unit
receives the record data of the recording medium using the record/reproduction data path through a mass storage class which is a firmware component of the information processing device, and

transfers the security command or the security data using the security command path through a USB host API which is a firmware component of the information processing device.

**12.** The information processing device according to claim 10,
wherein the data processing unit
receives the record data of the recording medium using a mass storage class supporting data transfer unit of the USB reader/writer, and
transfers the security command or the security data using a non-mass storage class supporting data transfer unit of the USB reader/writer.

**13.** The information processing device according to claim 10,
wherein the data processing unit
receives the record data of the recording medium using the record/reproduction data path through a mass storage class which is a firmware component of the information processing device, and
transfers the security command or the security data using the security command path through a command daemon which is a firmware component of the information processing device.

**14.** The information processing device according to claim 10,
wherein the data processing unit
receives the record data of the recording medium using the record/reproduction data path through a mass storage class which is a component of an application layer of the information processing device and a USB host API which is a firmware component of the information processing device, and
transfers the security command or the security data using the security command path through a USB host API which is a firmware component of the information processing device.

**15.** The information processing device according to claim 8,
wherein the data processing unit
performs a path correspondence determination process of detecting the security command path connected to the same device as a device connected through one record/reproduction data path, and
performs an authentication process and a record/reproduction data transfer process using the security command path and the record/reproduction data path which are connected to the same device and selected on the basis of the path correspondence determination process.

**16.** The information processing device according to claim 15,
wherein the path correspondence determination process is performed with referee to description information of a system file of the information processing device.

**17.** A data transfer control method performed in a reader/writer device, the reader/writer device including a recording medium mounting unit into which a recording medium is mountable, a USB connector, and a control unit that performs a data transfer process between the recording medium mounted into the recording medium mounting unit and a host connected to the USB connector, the data transfer control method comprising:

performing, by the control unit,
transfer control of record/reproduction data for the recording medium using a mass storage class (MSC) supporting data transfer unit, and
transfer control of a security command for the recording medium using a non-mass storage class supporting data transfer unit.

**18.** A data transfer control method performed in an information processing device, the information processing device including a communication unit that is connected with a device into which a recording medium is mounted and a data processing unit that executes a reproducing application that receives record data of the recording medium through the communication unit and reproduces the record data, the data transfer control method comprising:

performing, by the data processing unit, a data transfer process using the following two paths:

(a) a record/reproduction data path in which record data of the recording medium is input; and
(b) a security command path in which a security command or security data other than the record data of the recording medium is transferred.

**19.** A program causing a reader/writer device to perform a data transfer control process, the reader/writer device including a recording medium mounting unit into which a recording medium is mountable, a USB connector, and a control unit that performs a data transfer process between the recording medium mounted into the recording medium mounting unit and a host connected to the USB connector, the program causing the control unit to execute:

transfer control of record/reproduction data for the recording medium using a mass storage class (MSC) supporting data transfer unit, and
transfer control of a security command for the recording medium using a non-mass storage class supporting data transfer unit.

**20.** A program causing an information processing device to execute a data transfer control process, the information processing device including a communication unit that is connected with a device into which a recordingmedium is mounted and a data processing unit that executes a reproducing application that receives record data of the recording medium through the communication unit and reproduces the record data, the program causing the data processing unit to execute a data transfer process using the following two paths:

(a) a record/reproduction data path in which record data of the recording medium is input; and
(b) a security command path in which a security command or security data other than the record data of the recording medium is transferred.

FIG. 1
(1) READER/WRITER DEVICE CONFIGURATION
10 USB READER/WRITER
11 USB-A CONNECTOR
13 CARD SLOT
12 USB-micro B CONNECTOR
(2) MICRO SD CARD MOUNTING EXAMPLE
21 MICRO SD CARD
SD

30 SMART PHONE
10 USB READER/WRITER
21 MICRO SD CARD

FIG. 2

FIG. 3
10 USB READER/WRITER
30 SMART PHONE
32 TABLET TERMINAL
21 MICRO SD CARD
Micro
SD
41 PC
42 TV
43 RECORDING/REPRODUCING DEVICE

FIG. 4

RECORD/ REPRODUCTION DATA PATH
SECURITY COMMAND PATH
30
10
21
50
REPRODUCING APPLICATION
POSSIBLE TO READ AND WRITE RECORD/REPRODUCTION DATA FILE (File Read/Write)
51
REPRODUCING APPLICATION LIBRARY
(A) APPLICATION (APP)
71
UNABLE TO TRANSMIT SECURITY COMMAND IN APPLICATION AUTHORITY
61
FILE SYSTEM (File System)
81
(B) FIRMWARE (FW)
62
MASS STORAGE CLASS (Mass Storage Class)
63
USB HOST DRIVER (USB Host Driver)
(C) DEVICE (Device)
10
USB READER/WRITER (USB RW)

FIG. 5
RECORD/REPRODUCTION DATA PATH
SECURITY COMMAND PATH
(A) APPLICATION (APP)
(B) FIRMWARE (FW)
(C) DEVICE (Device)
30
10
21
50
REPRODUCING APPLICATION
51
REPRODUCING APPLICATION LIBRARY
72
WHEN TERMINAL SUPPORTS MSC Host, IT IS UNABLE TO PERFORM COMMUNICATION WITH MSC USING USB Host API UNLESS MSC IS UNMOUNTED AT TERMINAL SIDE
82
61
FILE SYSTEM (File System)
62
MASS STORAGE CLASS (Mass Storage Class)
64
USB HOST API (USB HOST API)
USB COMMUNICATION API AVAILABLE IN Android 3.1 OR LATER
63
USB HOST DRIVER (USB Host Driver)
10
USB READER/WRITER (USB RW)

FIG. 6
300 INFORMATION
PROCESSING DEVICE
300 INFORMATION PROCESSING DEVICE
INFORMATION PROCESSING DEVICE
[USB HOST]
100 (USB READER/WRITER)
110
120
100 (USB READER/WRITER)
MSC
SUPPORTING DATA
TRANSFER UNIT
NON-MSC
SUPPORTING DATA
TRANSFER UNIT
USB READER/WRITER (USB R/W)
[USB DEVICE]
200 RECORDING MEDIUM

FIG. 7

300
INFORMATION PROCESSING DEVICE (USB HOST)
100
110
120
111
Endpoint (Bulk-in)
112
Endpoint (Bulk-out)
130
Control endpoint
121
Endpoint (Bulk-in)
122
Endpoint (Bulk-out)
113
CBW/CSW/Data Transfer
Commands are forwarded
114
Data R/W
115
SeeQVault Command
116
SD Driver
MSC SUPPORTING DATA TRANSFER UNIT
NON-MSC SUPPORTING DATA TRANSFER UNIT
USB READER/WRITER (USB Reader Writer)
200 RECORDING MEDIUM

FIG. 8
21 MICRO SD CARD
10 (USB READER/WRITER)
GND
D-
D+
Vbus
USB-A CONNECTOR
151
GND
D-
D+
Vbus
USB-micro B CONNECTOR
161
5V
5V
VOLTAGE CONVERTING UNIT (LDO or DCDC)
152
3.3V
Vcc
Data
150
READER/WRITER CONTROL UNIT (Card Reader/Writer IC)

FIG. 9
200 RECORDING MEDIUM
100 (USB READER/WRITER)
GND
D-
D+
Vbus
151
USB-A CONNECTOR
GND
D-
D+
Vbus
161
USB-micro B CONNECTOR
5V
152
VOLTAGE CONVERTING UNIT (LDO or DCDC)
5V
162
3.3V
VOLTAGE CONVERTING UNIT (LDO or DCDC)
3.3V
163
IC RESET UNIT (Reset IC)
Vcc
Vcc
150
RESET
Data
READER/WRITER CONTROL UNIT (Card Reader/Writer IC)
GPIO
(High or Low)
164
MICROCOMPUTER (MCU)
Vcc

FIG. 10
(A) WHEN HOST IS CONNECTED TO USB–A CONNECTOR
(1) Vcc__a
3.3V
0V
(2) Vcc__b
0V
(3) RESET
Low
(4) GPIO
Low
(S1) CHECK GPIO IS Low AT SAME TIME AS ACTIVATION OF Vcc_a
t1
TIME (T)

FIG. 11
(B) WHEN HOST IS CONNECTED TO USB–micro B CONNECTOR
(S1) High IS OUTPUT TO GPIO BY IC THAT ACTIVATES AT Vcc_b
(S2) AFTER High IS OUTPUT TO GPIO, IC RESET UNIT OUTPUTS RESET SIGNAL, AND READER/WRITER CONTROL UNIT (R/W IC) IS RESET
(1) Vcc__a
0V
3.3V
(2) Vcc__b
0V
High
(3) RESET
Low
High
(4) GPIO
Low
(S3) AFTER RESET SIGNAL IS INPUT, READ GPIO AGAIN AND CONFIRM THAT GPIO IS High
t1
t2
t3
t4
TIME (T)

FIG. 12
(EXEMPLARY DATA TRANSFER CONFIGURATION A)
RECORD/ REPRODUCTION DATA PATH
SECURITY COMMAND PATH
300
(A) APPLICATION (APP)
(B) FIRMWARE (FW)
(C) DEVICE (Device)
100
200
350
REPRODUCING APPLICATION
351
REPRODUCING APPLICATION LIBRARY
RECORD/REPRODUCTION DATA FILE READ/WRITE (File Read/Write) PATH
411
412
SECURITY COMMAND PATH
314
311
FILE SYSTEM (File System)
USB HOST API (USB HOST API)
312
MASS STORAGE CLASS (Mass Storage Class)
412
SECURITY COMMAND PATH
313
USB HOST DRIVER (USB Host Driver)
100
MSC SUPPORTING DATA TRANSFER UNIT
110
NON-MSC SUPPORTING DATA TRANSFER UNIT
120
USB READER/WRITER (USB RW)

FIG. 13
300
100
200
350
314
313
120
200
USER OPERATION UNIT
REPRODUCING APPLICATION (APP)
USB HOST API (FW)
USB HOST DRIVER (FW)
NON-MSC SUPPORTING DATA TRANSFER UNIT
RECORDING MEDIUM
S201 REPRODUCTION INSTRUCTION
S202
AUTHENTICATION PROCESS
311
312
110
FILE SYSTEM (FW)
MASS STORAGE CLASS (FW)
MSC SUPPORTING DATA TRANSFER UNIT
OUTPUT UNIT
S203 DATA READ REQUEST
S204 READ DATA TRANSMISSION
S206 REPRODUCTION DATA OUTPUT
S205 DECRYPTION AND DECODING PROCESS

FIG. 14

(EXEMPLARY DATA TRANSFER CONFIGURATION B)
RECORD/ REPRODUCTION DATA PATH
SECURITY COMMAND PATH
(A) APPLICATION (APP)
(B) FIRMWARE (FW)
(C) DEVICE (Device)
300
100
200
350
REPRODUCING APPLICATION
351
REPRODUCING APPLICATION LIBRARY
RECORD/REPRODUCTION DATA FILE READ/WRITE (File Read/Write) PATH
421
422
SECURITY COMMAND PATH
311
FILE SYSTEM (File System)
314
USB HOST API (USB HOST API)
315
COMMAND DAEMON (Command Daemon)
312
MASS STORAGE CLASS (Mass Storage Class)
422
SECURITY COMMAND PATH
313
SECURITY COMMAND PATH
USB HOST DRIVER (USB Host Driver)
422
100
MSC SUPPORTING DATA TRANSFER UNIT
110
NON-MSC SUPPORTING DATA TRANSFER UNIT
120
USB READER/WRITER (USB RW)

FIG. 15

USER OPERATION UNIT
350
REPRODUCING APPLICATION (APP)
315
COMMAND DAEMON (FW)
312
MASS STORAGE CLASS (FW)
300
313
USB HOST DRIVER (FW)
100
200
110
MSC SUPPORTING DATA TRANSFER UNIT
200
RECORDING MEDIUM
S221 REPRODUCTION INSTRUCTION
S222
AUTHENTICATION PROCESS
311
FILE SYSTEM (FW)
OUTPUT UNIT
S223 DATA READ REQUEST
S224
READ DATA TRANSMISSION
S226 REPRODUCTION DATA OUTPUT
S225 DECRYPTION AND DECODING PROCESS

FIG. 16
(EXEMPLARY DATA TRANSFER CONFIGURATION C)
RECORD/REPRODUCTION DATA PATH
SECURITY COMMAND PATH
300
100
200
(A) APPLICATION (APP)
(B) FIRMWARE (FW)
(C) DEVICE (Device)
RECORD/REPRODUCTION DATA FILE READ/WRITE (File Read/Write) PATH
350
REPRODUCING APPLICATION
351
REPRODUCING APPLICATION LIBRARY
SECURITY COMMAND PATH
432
431
FILE SYSTEM (File System)
352
MASS STORAGE CLASS (Mass Storage Class)
353
314
USB HOST API (USB HOST API)
FILE SYSTEM (File System)
311
MASS STORAGE CLASS (Mass Storage Class)
312
USB HOST DRIVER (USB Host Driver)
313
SECURITY COMMAND PATH
NORMAL FILE READ/WRITE PATH
432
431
120
NON-MSC SUPPORTING DATA TRANSFER UNIT
110
MSC SUPPORTING DATA TRANSFER UNIT
USB READER/WRITER (USB RW)
100

FIG. 17
300
100
200
350
USER OPERATION UNIT
REPRODUCING APPLICATION (APP)
314
USB HOST API (FW)
313
USB HOST DRIVER (FW)
110
MSC SUPPORTING DATA TRANSFER UNIT
200
RECORDING MEDIUM
S241 REPRODUCTION INSTRUCTION
S242
AUTHENTICATION PROCESS
352
FILE SYSTEM (APP)
353
MASS STORAGE CLASS (APP)
OUTPUT UNIT
S243 DATA READ REQUEST
S244
READ DATA TRANSMISSION
S246 REPRODUCTION DATA OUTPUT
S245 DECRYPTION AND DECODING PROCESS

FIG. 18
START
IS IT POSSIBLE TO ACCESS RECORDING MEDIUM THROUGH USB HOST API OF HOST AND NON-MSC SUPPORTING DATA TRANSFER UNIT OF DEVICE (USB READER/WRITER)?
S301
YES
NO
EXEMPLARY CONFIGURATION A
S302
PERFORM AUTHENTICATION PROCESS USING USB HOST API OF HOST AND NON-MSC SUPPORTING DATA TRANSFER UNIT OF DEVICE (USB READER/WRITER)
IS IT POSSIBLE TO ACCESS RECORDING MEDIUM THROUGH COMMAND DAEMON (Command Daemon)?
S303
YES
NO
EXEMPLARY CONFIGURATION B
S304
PERFORM AUTHENTICATION PROCESS USING COMMAND DAEMON (Command Daemon) OF HOST AND MSC SUPPORTING DATA TRANSFER UNIT OF DEVICE (USB READER/WRITER)
EXEMPLARY CONFIGURATION C
S305
PERFORM AUTHENTICATION PROCESS USING USB HOST API OF HOST AND MSC SUPPORTING DATA TRANSFER UNIT OF DEVICE (USB READER/WRITER)
END

FIG. 19

100a USB READER/WRITER A
200a MICRO SD CARD A
380 USB HUB
300 INFORMATION PROCESSING DEVICE (SMART PHONE)
200b MICRO SD CARD B
100b USB READER/WRITER B

FIG. 20
(EXEMPLARY DATA TRANSFER CONFIGURATION A)
RECORD/ REPRODUCTION DATA PATH
SECURITY COMMAND PATH
300
(A) APPLICATION (APP)
(B) FIRMWARE (FW)
(C) DEVICE (Device)
RECORD/REPRODUCTION DATA FILE READ/WRITE (File Read/Write) PATH
SECURITY COMMAND PATH
350
REPRODUCING APPLICATION
351
REPRODUCING APPLICATION LIBRARY
511a
511b
512a
512b
311
FILE SYSTEM (File System)
USB HOST API (USB HOST API)
314
312
MASS STORAGE CLASS (Mass Storage Class)
512a
512b
SECURITY COMMAND PATH
313
USB HOST DRIVER (USB Host Driver)
511b
100a
100b
110a
120a
110b
120b
MSC SUPPORTING DATA TRANSFER UNIT
NON-MSC SUPPORTING DATA TRANSFER UNIT
USB READER/WRITER (USB RW)–A
USB READER/WRITER (USB RW)–B
200a
200b

FIG. 21
(EXEMPLARY DATA TRANSFER CONFIGURATION A)
RECORD/ REPRODUCTION DATA PATH
SECURITY COMMAND PATH
300
(A) APPLICATION (APP)
(B) FIRMWARE (FW)
(C) DEVICE (Device)
100a 100b
200a 200b
350
351
REPRODUCING APPLICATION LIBRARY
FILE PATH INDICATING MOUNT POINT OF Linux (/storage/USBDriveA)
FILE PATH INDICATING MOUNT POINT OF Linux (/storage/USBDriveB)
CONNECTED DEVICE INFORMATION THAT CAN BE ACQUIRED FROM USB HOST API VendorID:0x0101 Product ID:0x0001
CONNECTED DEVICE INFORMATION THAT CAN BE ACQUIRED FROM USB HOST API VendorID:0x0108 Product ID:0x0008
511a
511b
512a
512b
311
FILE SYSTEM (File System)
314
USB HOST API (USB HOST API)
312
MASS STORAGE CLASS (Mass Storage Class)
313
USB HOST DRIVER (USB Host Driver)
100a
110a
MSC SUPPORTING DATA TRANSFER UNIT
120a
NON-MSC SUPPORTING DATA TRANSFER UNIT
USB READER/WRITER (USB RW)-A
100b
110b
MSC SUPPORTING DATA TRANSFER UNIT
120b
NON-MSC SUPPORTING DATA TRANSFER UNIT
USB READER/WRITER (USB RW)-B

FIG. 22

(1) CONNECTED DEVICE INFORMATION CORRESPONDING TO RECORD/REPRODUCTION DATA PATH
100a
200a
CONNECTED DEVICE INFORMATION 1a
FILE PATH INDICATING MOUNT POINT OF Linux
(/storage/USBDriveA)
100b
200b
CONNECTED DEVICE INFORMATION 1b
FILE PATH INDICATING MOUNT POINT OF Linux
(/storage/USBDriveB)
?
?
?
?
(2) CONNECTED DEVICE INFORMATION CORRESPONDING TO SECURITY COMMAND PATH
CONNECTED DEVICE INFORMATION 2a
CONNECTED DEVICE INFORMATION THAT CAN BE ACQUIRED FROM USB HOST API
VendorID:0x0101
Product ID:0x0001
CONNECTED DEVICE INFORMATION 2b
CONNECTED DEVICE INFORMATION THAT CAN BE ACQUIRED FROM USB HOST API
VendorID:0x0108
Product ID:0x0008
311
FILE SYSTEM
(File System)
312
MASS STORAGE CLASS
(Mass Storage Class)
314
USB HOST API
(USB HOST API)

FIG. 23
start
S501
READ DESCRIPTION DATA OF DEVICE MOUNT INFORMATION FROM Linux SYSTEM FILE [proc/mounts]
S502
EOF
YES
NO
end
S503
IS IT MOUNT POINT OF EXTERNAL DEVICE? (IS dev/block INCLUDED?)
NO
YES
S504
READ MOUNT POINT
S505
ACQUIRE LINK INFORMATION (SYMBOLIC LINK) FOR RECORD FILE OF DEVICE MOUNT INFORMATION ACQUIRED FROM USB HOST API AND MOVE TO LINK DESTINATION (MOVE TO LINK DESTINATION OF /sys/dev/block/ OR /sys/class/block)
S506
ACQUIRE VENDOR ID AND PRODUCT ID FROM CONNECTED DEVICE INFORMATION RECORD FILE ACQUIRED FROM USB HOST API
COMBINATION OF Vendor Id AND Product Id OF USB RW HAVING MOUNT POINT OF /storage/UsbDriveA IS DETERMINED

| MOUNT POINT | VENDOR ID (Vendor ID) | PRODUCT ID (Product ID) |
|---|---|---|
| /storage/UsbDriveA | 0x0101 | 0x0001 |

FIG. 24
EXAMPLE OF DEVICE MOUNT INFORMATION ACQUIRED FROM Linux SYSTEM FILE
INDICATES THAT MOUNTED DEVICE IS EXTERNAL STORAGE WHEN /dev/block IS INCLUDED IN DESCRIPTION
INDICATES POSITION OF LINK INFORMATION (SYMBOLIC LINK) FOR RECORD FILE OF DEVICE MOUNT INFORMATION ACQUIRED FROM USB HOST API ("8:0" IN THIS EXAMPLE)
DEVICE MOUNT POINT INFORMATION
/dev/block/vold/8:0 /storage/UsbDriveA vfat
rw,dirsync,nosuid,nodev,noexec,relatime,uid=1000,gid=1015,fmask=0702,dmask=07
02,allow_utime=0020,codepage=cp437,iocharset=iso8859-
1,shortname=mixed,utf8,errors=remount-ro

FIG. 25

EXEMPLARY DIRECTORY CONFIGURATION OF /sys/dev/block or /sys/class/block
sys
dev
block
8:0
INDICATES POSITION OF LINK INFORMATION (SYMBOLIC LINK) FOR RECORD FILE OF DEVICE MOUNT INFORMATION ACQUIRED FROM USB HOST API ("8:0" IN THIS EXAMPLE)
EXAMPLE OF PATH OF LINK DESTINATION OF 8:0
../../devices/platform/msm_hsusb_host/usb2/2-1/2-1:1.0/host0/target0:0:0/0:0:0:0/block/sda
MOVE TO LINK DESTINATION ACCORDING TO PATH AND READ RECORD FILE [VENDOR ID DESCRIPTION FILE (idVendor FILE) AND PRODUCT ID DESCRIPTION FILE (idProduct FILE)] OF DEVICE MOUNT INFORMATION ACQUIRED FROM USB HOST API

FIG. 26
(a) VENDOR ID
DESCRIPTION FILE
0x0101
VENDOR ID
(Vendor ID)
(b) PRODUCT ID
DESCRIPTION FILE
0x0001
PRODUCT ID
(Product ID)

USER OPERATION UNIT
REPRODUCING APPLICATION (APP)
350
USB HOST API (FW)
314
USB HOST DRIVER (FW)
313
300
100
200
NON-MSC SUPPORTING DATA TRANSFER UNIT
120
RECORDING MEDIUM
200
S201 REPRODUCTION INSTRUCTION
S201-2 PATH CORRESPONDENCE DETERMINATION PROCESS
S202
AUTHENTICATION PROCESS
FILE SYSTEM (FW)
311
MASS STORAGE CLASS (FW)
312
MSC SUPPORTING DATA TRANSFER UNIT
110
S203 DATA READ REQUEST
S204 READ DATA TRANSMISSION
S205 DECRYPTION AND DECODING PROCESS
OUTPUT UNIT
S206 REPRODUCTION DATA OUTPUT

FIG. 27

FIG. 28

701
CPU
702
ROM
703
RAM
704
705
INPUT/OUTPUT INTERFACE
706
INPUT UNIT
707
OUTPUT UNIT
708
STORAGE UNIT
709
COMMUNICATION UNIT
710
DRIVE
711
REMOVABLE MEDIUM

## INTERNATIONAL SEARCH REPORT

International application No.
PCT/JP2015/071078

A. CLASSIFICATION OF SUBJECT MATTER
*G06F13/36*(2006.01)i, *G06F3/00*(2006.01)i, *G06F3/06*(2006.01)i, *G06F3/08*(2006.01)i, *G06F13/38*(2006.01)i

According to International Patent Classification (IPC) or to both national classification and IPC

B. FIELDS SEARCHED

Minimum documentation searched (classification system followed by classification symbols)
G06F3/00, G06F12/14, G06F13/10, G06F13/38, G06F21/10, G06F21/60, G06K17/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2008-533561 A (Cypress Semiconductor Corp.), 21 August 2008 (21.08.2008), paragraphs [0005] to [0027]; fig. 1 to 4<br>& JP 5194204 B & US 2006/0184806 A1<br>& US 8819811 B1 & WO 2006/088681 A2<br>& KR 10-2007-0105359 A & CN 101180615 A | 1-3,7,17,19<br>11,13,14<br>4-6,15,16 |
| X<br><br>Y<br>A | JP 2005-223874 A (Sony Corp.), 18 August 2005 (18.08.2005), paragraphs [0048] to [0265]; fig. 3 to 27<br>& US 2007/0143592 A1 & WO 2005/067198 A1<br>& EP 1701469 A1 & KR 10-2006-0130087 A<br>& CN 1922817 A & TW 200535815 A<br>& KR 10-1108526 B | 8-10,12,18,20<br><br>11,13,14<br>4-6,15,16 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 30 September 2015 (30.09.15) | 13 October 2015 (13.10.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014085985 A